# EUROPEAN PATENT SPECIFICATION

(11) **EP 2 387 311 B1**
(45) Date of publication and mention of the grant of the patent: **10.07.2013**
(21) Application number: 10703797.0
(22) Date of filing: 14.01.2010
(51) Int. Cl.: A01N 35/06, A01N 37/02, A01N 41/04, A01N 43/08, A01N 43/10, A01N 43/40, A01N 43/50, A01N 43/56, A01N 43/78, A01N 43/80, A01N 47/06, A01N 57/14, A01P 3/00, A01P 7/02, A01P 7/04

(54) **BICYCLIC 1,3-DIONES AND THEIR USE AS INSECITICIDES, ACARICIDES AND/OR FUNGICIDES**
BICYCLISCHE 1,3-DIONE UND DEREN VERWENDUNG ALS INSEKTIZIDE, AKARIZIDE UND/ODER FUNGIZIDE
1,3-DIONES BICYCLES ET LEUR UTILISATION EN TANT QU'INSECTICIDES, ACARICIDES ET/OU FONGICIDES

(30) Priority: 19.01.2009 EP 09150836
(43) Date of publication of application: 23.11.2011
(73) Proprietor: Bayer CropScience AG, 40789 Monheim (DE)
(72) Inventor: BRETSCHNEIDER, Thomas, 53797 Lohmar (DE); FISCHER, Reiner, 40789 Monheim (DE); LEHR, Stefan, 65835 Liederbach (DE); HILLEBRAND, Stefan, 41462 Neuss (DE); VOERSTE, Arnd, 50674 Köln (DE)
(74) Representative: BIP Patents
(86) International application number: PCT/EP2010/000151
(87) International publication number: WO 2010/081686

(56) References cited:
- WO-A-03/059065
- WO-A-2008/145336
- US-A1- 2004 127 365
- US-A1- 2004 167 031
- US-A1- 2006 166 829
- US-B1- 6 417 370
- US-B1- 6 451 843

## Description

The present invention relates to the use of bicyclic 1,3-diones and derivatives thereof as inseciticides, acaricides and/or fungicides.

Cyclic diones having herbicidal action are described, for example, in US 4,175,135, US 4,209,532 and WO 2008/145336.

Bicyclic 1,3-diones compounds, and derivatives thereof, having insecticidal and/or acaricidal and/or fungicidal properties have now been found.

The present invention accordingly relates to the use of compounds of formula (I) 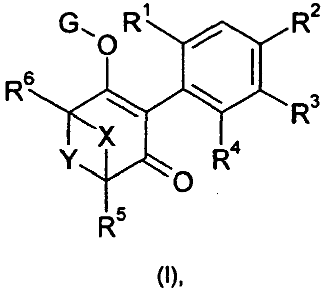 wherein
- R¹: is methyl, ethyl, n-propyl, iso-propyl, cyclopropyl, halomethyl, haloethyl, halogen, vinyl, ethynyl, methoxy, ethoxy, halomethoxy or haloethoxy,
- R² and R³: are independently hydrogen, halogen, C₁-C₆alkyl, C₁-C₆haloalkyl, C₁-C₆alkoxy, C₁-C₆haloalkoxy, C₂-C₆alkenyl, C₂-C₆haloalkenyl, C₂-C₆alkynyl, C₃-C₆alkenyloxy, C₃-C₆haloalkenyloxy, C₃-C₆alkynyloxy, C₃-C₆cycloalkyl, C₁-C₆alkylthio, C₁-C₆alkylsulfinyl, C₁-C₆alkylsulfonyl, C₁-C₆alkylsulfonyloxy, C₁-C₆haloalkylsulfonyloxy, cyano, nitro, optionally substituted phenyl or optionally substituted heteroaryl where at least one of R² and R³ is optionally substituted phenyl or optionally substituted heteroaryl,
- R⁴: is hydrogen, methyl, ethyl, n-propyl, iso-propyl, halomethyl, haloethyl, halogen, vinyl, ethynyl, methoxy, ethoxy, halomethoxy or haloethoxy,
- R⁵ and R⁶: are independently hydrogen, C₁-C₆alkyl, C₂-C₆alkenyl, C₂-C₆alkynyl, C₁-C₆haloalkyl, C₂-C₆haloalkenyl, C₁-C₆alkoxy, C₃-C₆alkenyloxy, C₃-C₆haloalkenyloxy, C₃-C₆akynyloxy, C₁-C₄alkoxyC₁-C₄alkyl, C₁-C₄alkoxyC₁-C₄alkoxy, C₁-C₄alkoxyC₁-C₄alkoxyC₁-C₄akyl, C₁-C₆alkylthio, C₁-C₄alkylthioC₁-C₄alkyl, C₁-C₄alkylsulfinyl, C₁-C₄alkylsulfinylC₁-C₄alkyl, C₁-C₄alkylsulfonyl, C₁-C₄alkylsulfonylC₁-C₄alkyl, hydroxy-C₁-C₄alkyl, C₁-C₆haloalkoxyC₁-C₄alkyl, C₃-C₆alkenyloxyC₁-C₄alkyl, C₃-C₆haloalkenyloxyC₁-C₄alkyl, C₃-C₆alkynyloxyC₁-C₄alkyl, C₁-C₆cyanoalkyl, C₁-C₄cyanoalkoxy, C₁-C₄cyanoalkoxyC₁-C₄alkyl, hydroxy, C₁-C₆alkylcarbonyl, carboxy, C₁-C₆alkoxycarbonyl, C₁-C₆alkylaminocarbonyl, di-C₁-C₆alkylcarbonyl, tri(C₁-C₄alkyl)silyl or tri(C₁-C₄alkyl)silyloxy,
- X: is optionally substituted C₁-C₃alkylene,
- Y: is optionally substituted C₁-C₃alkylene or optionally substituted C₂-C₃alkenylene
and
- G: represents hydrogen (a) or represents one of the groups 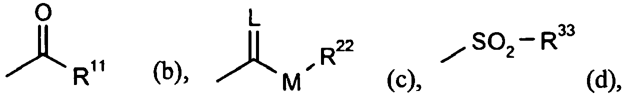 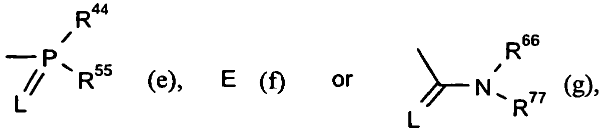 in which
- E: represents a metal ion or an ammonium ion,
- L: represents oxygen or sulphur and
- M: represents oxygen or sulphur,
- R¹¹: represents in each case optionally halogen- or cyano-substituted C₁-C₂₀-alkyl, C₂-C₂₀-alkenyl, C₁-C₈-alkoxy-C₁-C₈-alkyl, C₁-C₈-alkylthio-C₁-C₈-alkyl or poly-C₁-C₈-alkoxy-C₁-C₈-alkyl or represents optionally halogen-, C₁-C₆-alkyl- or C₁-C₆-alkoxy-substituted C₃-C₈-cycloalkyl in which optionally one or two not directly adjacent methylene groups are replaced by oxygen and/or sulphur,
represents optionally halogen-, cyano-, nitro-, C₁-C₆-alkyl-, C₁-C₆-alkoxy-, C₁-C₆-haloalkyl-, C₁-C₆-haloalkoxy-, C₁-C₆-alkylthio- or C₁-C₆-alkylsulphonyl-substituted phenyl, represents optionally halogen-, nitro-, cyano-, C₁-C₆-alkyl-, C₁-C₆-alkoxy-, C₁-C₆-haloalkyl- or C₁-C₆-haloalkoxy-substituted phenyl-C₁-C₆-alkyl,
represents optionally halogen- or C₁-C₆-alkyl-substituted 5- or 6-membered hetaryl having one or two heteroatoms from the group consisting of oxygen, sulphur and nitrogen,
represents optionally halogen- or C₁-C₆-alkyl-substituted phenoxy-C₁-C₆-alkyl or
represents optionally halogen-, amino- or C₁-C₆-alkyl-substituted 5- or 6-membered hetaryloxy-C₁-C₆-alkyl having one or two heteroatoms from the group consisting of oxygen, sulphur and nitrogen,
- R²²: represents in each case optionally halogen- or cyano-substituted C₁-C₂₀-alkyl, C₂-C₂₀-alkenyl, C₁-C₈-alkoxy-C₂-C₈-alkyl or poly-C₁-C₈-alkoxy-C₂-C₈-alkyl,
represents optionally halogen-, C₁-C₆-alkyl- or C₁-C₆-alkoxy-substituted C₃-C₈-cycloalkyl or
represents in each case optionally halogen-, cyano-, nitro-, C₁-C₆-alkyl-, C₁-C₆-alkoxy-, C₁-C₆-haloalkyl- or C₁-C₆-haloalkoxy-substituted phenyl or benzyl,
- R³³: represents optionally halogen-substituted C₁-C₈-alkyl or in each case optionally halogen-, C₁-C₆-alkyl-, C₁-C₆-alkoxy-, C₁-C₄-haloalkyl-, C₁-C₄-haloalkoxy-, cyano- or nitro-substituted phenyl or benzyl,
- R⁴⁴ and R⁵⁵: independently of one another represent in each case optionally halogen-substituted C₁-C₈-alkyl, C₁-C₈-alkoxy, C₁-C₈-alkylamino, di(C₁-C₈-alkyl)amino, C₁-C₈-alkylthio or C₃-C₈-alkenylthio or represent in each case optionally halogen-, nitro-, cyano-, C₁-C₄-alkoxy-, C₁-C₄-haloalkoxy-, C₁-C₄-alkylthio-, C₁-C₄-haloalkylthio-, C₁-C₄-alkyl- or C₁-C₄-haloalkyl-substituted phenyl, phenoxy or phenylthio,
- R⁶⁶ and R⁷⁷: independently of one another represent hydrogen, represent in each case optionally halogen- or cyano-substituted C₁-C₈-alkyl, C₃-C₈-cycloalkyl, C₁-C₈-alkoxy, C₃-C₈-alkenyl or C₁-C₈-alkoxy-C₂-C₈-alkyl, represent in each case optionally halogen-, C₁-C₈-alkyl-, C₁-C₈-haloalkyl- or C₁-C₈-alkoxy-substituted phenyl or benzyl or together represent an optionally C₁-C₆-alkyl-substituted C₃-C₆-alkylene radical in which optionally one methylene group is replaced by oxygen or sulphur
as insecticides and/or acaricides and/or fungicides.

In the substituent definitions of the compounds of the formula I, the alkyl radicals and alkyl moieties of alkoxy, alkylsulfonyl etc. having I to 6 carbon atoms are preferably methyl, ethyl as well as propyl, butyl, pentyl and hexyl, in form of their straight and branched isomers.

The alkenyl and alkynyl radicals having 2 to 6 carbon atoms can be straight or branched and can contain more than 1 double or triple bond. Examples are vinyl, allyl, propargyl, butenyl, butynyl, pentenyl and pentynyl.

Suitable cycloalkyl groups contain 3 to 6 carbon atoms and are for example cyclopropyl, cyclobutyl, cyclopentyl and cyclohexyl. Cyclopropyl, cyclopentyl and cyclohexyl are preferred.

Preferred halogens are fluorine, chlorine and bromine.

Substituted C₁-C₃-alkylene and substituted C₂-C₃alkenylene units represent saturated and unsaturated carbon chains which may be substituted once or more than once by substituents such as C₁-C₆alkyl, C₁-C₆haloalkyl, C₂-C₆alkenyl, C₂-C₆haloalkenyl, C₂-C₆alkynyl, C₃-C₇cycloalkyl, C₃-C₇cycloalkyl C₁-C₄alkyl, C₅-C₇cycloalkenyl, C₅- C₇cycloalkenyl C₁-C₄alkyl, phenyl C₁-C₄alkyl, substituted phenyl C₁-C₄alkyl, heteroaryl C₁-C₄alkyl and substituted heteroaryl C₁-C₄alkyl, heterocyclyl C₁-C₄alkyl and substituted heterocyclyl C₁-C₄alkyl, C₁-C₆alkoxy, C₁-C₆haloalkoxy, C₁-C₄alkoxy C₁-C₄alkyl, C₁-C₄alkoxyC₁-C₄alkoxy, C₁-C₄alkoxy C₁-C₄alkoxy C₁-C₄alkyl, C₁-C₆alkylthio, C₁-C₄alkylthio C₁-C₄alkyl, C₁-C₄alkylsulfinyl, C₁-C₄alkylsulfinyl C₁-C₄alkyl, C₁-C₄alkylsulfonyl, C₁-C₄alkylsulfonyl C₁-C₄alkyl, halo, cyano, C₁-C₆cyanoalkyl, C₁-C₆cyanoalkoxy, hydroxy, C₃-C₆alkenyloxy, C₃-C₆haloalkenyloxy, C₃-C₆alkynyloxy, phenoxy, substituted phenoxy, heteroaryloxy, substituted heteroaryloxy, heterocyclyloxy, substituted heterocyclyloxy, phenylC₁-C₄alkoxy, substituted phenyl C₁-C₄alkoxy, heteroaryl C₁-C₄alkoxy, substituted heteroaryl C₁-C₄alkoxy, heterocyclyl C₁-C₄alkoxy, substituted heterocyclyl C₁-C₄alkoxy, hydroxy- C₁-C₄alkyl, C₁-C₆haloalkoxy C₁-C₄alkyl, C₃-C₆alkenyloxyC₁-C₄alkyl, C₃-C₆haloalkenyloxy C₁-C₄alkyl, C₃-C₆alkynyloxy C₁-C₄alkyl, C₁-C₄alkylcarbonyloxyC₁-C₄alkyl, C₁-C₄alkoxycarbonyl C₁-C₄alkyl, C₁-C₄alkylaminocarbonyloxyC₁-C₄alkyl, di- C₁-C₄alkylaminocarbonyloxyC₁-C₄alkyl, phenoxy C₁-C₄alkyl, substituted phenoxy C₁-C₄alkyl, heteroaryloxy C₁-C₄alkyl, substituted heteroaryloxyC₁-C₄alkyl, heterocyclyloxy C₁-C₄alkyl, substituted heterocyclyloxy C₁-C₄alkyl, phenyl C₁-C₄alkoxy C₁-C₄alkyl, substituted phenyl C₁-C₄alkoxy C₁-C₄alkyl, heteroarylC₁-C₄alkoxyC₁-C₄alkyl, substituted heteroarylC₁-C₄alkoxyC₁-C₄alkyl, heterocyclyl C₁-C₄alkoxy C₁-C₄alkyl, substituted heterocyclyl C₁-C₄alkoxy C₁-C₄alkyl, C₁-C₆cyanoalkoxy C₁-C₄alkyl, tri(C₁-C₄alkyl)silyloxy C₁-C₄alkyl, carboxy, C₁-C₄alkylcarbonyl, C₁-C₄alkoxycarbonyl, amidocarbonyl, C₁-C₄alkylaminocarbonyl, di- C₁-C₄alkylaminocarbonyl, phenylaminocarbonyl, substituted phenylaminocarbonyl, heteroarylaminocarbonyl, substituted heteroarylcarbonyl, C₁-C₄alkylcarbonyloxy, C₁-C₄alkoxycarbonyloxy, C₁-C₆alkylaminocarbonyloxy, di C₁-C₄alkylaminocarbonyloxy, C₁-C₆alkylaminothiocarbonyloxy, phenylcarbonyloxy, substituted phenylcarbonyloxy, heteroarylcarbonyloxy, substituted heteroarylcarbonyloxy, heterocyclylcarbonyloxy, substituted heterocyclylcarbonyloxy, amino, C₁-C₄alkylcarbonylamino, C₁-C₄alkoxycarbonylamino, (C₁-C₄alkylthio)carbonylamino, C₁-C₄alkoxythiocarbonylamino, C₁-C₄alkyl(thiocarbonyl)amino, C₁-C₄alkylaminocarbonylamino, di-C₁-C₄alkylaminocarbonylamino, phenylcarbonylamino, substituted phenylcarbonylamino, heteroarylcarbonylamino, substituted heteroarylcarbonylamino, phenoxycarbonylamino, substituted phenoxycarbonylamino, phenylaminocarbonylamino, substituted phenylaminocarbonylamino, C₁-C₄alkylsulfonylamino, C₁-C₄haloalkylsulfonylamino, phenylsulfonylamino, substituted phenylsulfonylamino, C₁-C₄alkylcarbonylaminoC₁-C₄alkyl, C₁-C₄alkoxycarbonylaminoC₁-C₄alkyl, (C₁-C₄alkylthio)carbonylamino C₁-C₄alkyl, C₁-C₄alkoxythiocarbonylamino C₁-C₄alkyl, C₁-C₄alky(thiocarbony)amino C₁-C₄alkyl, C₁-C₄alkylaminocarbonylamino C₁-C₄alkyl, di- C₁-C₄alkylaminocarbonylamino C₁-C₄alkyl, phenylcarbonylamino C₁-C₄alkyl, substituted phenylcarbonylamino C₁-C₄alkyl, heteroarylcarbonylamino C₁-C₄alkyl, substituted heteroarylcarbonylamino C₁-C₄alkyl, phenoxycarbonylamino C₁-C₄alkyl, substituted phenoxycarbonylamino C₁-C₄alkyl, phenylaminocarbonylamino C₁-C₄alkyl, substituted phenylaminocarbonylamino C₁-C₄alkyl, C₁-C₄alkylsulfonylamino C₁-C₄alkyl, C₁-C₄haloalkylsulfonylamino C₁-C₄alkyl, phenylsulfonylamino C₁-C₄alkyl, substituted phenylsulfonylamino C₁-C₄alkyl, tri(C₁-C₄alkyl)silyl, tri(C₁-C₄alkyl)silyloxy, phenyl and substituted phenyl, heteroaryl and substituted heteroaryl, heterocyclyl and substituted heterocyclyl. Preferably, the C₁-C₃alkylene and C₂-C₃alkenylene groups X and Y are unsubstituted, or are substituted once or twice by C₁-C₄alkyl, C₁-C₄alkoxy, C₁-C₄alkoxyC₁-C₄alkyl, halogen or hydroxy.

Where two preferably adjacent substituents are present on the C₁-C₃alkylene and C₂-C₃alkenylene groups these substituents may additionally join together to form a 3-7 membered saturated ring, which may optionally contain one or more heteroatoms selected from oxygen, sulfur or nitrogen, or may form a 5-7 membered unsaturated ring, which may optionally contain one or more heteroatoms which are selected from oxygen, sulfur or nitrogen. Preferred rings which are formed are dioxolane rings, optionally substituted once or twice by C₁-C₃alkyl.

Preferred examples of heteroaryls are thienyl, furyl, pyrrolyl, isoxazolyl, oxazolyl, isothiazolyl, thiazolyl, pyrazolyl, imidazolyl, triazolyl, tetrazolyl, pyridyl, pyrimidinyl, pyrazinyl, pyridazinyl, triazinyl, oxadiazolyl and thiadiazolyl, and, where appropriate, N-oxides and salts thereof.

These heteroaryls as well as the phenyl rings can be substituted by one or more substituents, where preferred substituents may be selected from C₁-C₄alkyl, C₂-C₄alkenyl, C₂-C₄alkynyl, C₁-C₄haloalkyl, C₃-C₇cycloalkyl, C₅-C₇cycloalkenyl, C₁-C₄alkoxy, C₁-C₄haloalkoxy, C₁-C₄alkylthio, C₁-C₄haloalkylthio, C₁-C₄alkylsulfinyl, C₁-C₄haloalkylsulfinyl, C₁-C₄alkylsulfonyl, C₁-C₄haloalkylsulfonyl, fluoro, chloro, bromo, iodo, cyano, nitro, hydroxy- C₁-C₄alkyl, formyl, carboxy, C₁-C₄alkylcarbonyl, C₁-C₄alkoxycarbonyl, amidocarbonyl, C₁-C₄alkylaminocarbonyl, di- C₁-C₄alkylaminocarbonyl, amino, C₁-C₄alkylcarbonylamino, C₁-C₄alkoxycarbonylamino, C₁-C₄alkylaminocarbonylamino, di C₁-C₄alkylaminocarbonylamino, C₁-C₄alkylsulfonylamino, C₁-C₄haloalkylsulfonylamino, C₁-C₄alkylsulfonyloxy and C₁-C₄haloalkylsufonyloxy and are preferably selected from C₁-C₄alkyl, C₁-C₄alkoxy, C₁-C₄haloalkoxy, halo, cyano and nitro, especially C₁-C₂alkyl, C₁-C₂alkoxy, C₁-C₂haloalkoxy, fluoro, chloro and cyano.

In a preferred group of compounds of the formula I, R¹ is methyl, ethyl, halogen, halomethyl, vinyl, ethynyl or halomethoxy. More preferably, R¹ is methyl or ethyl, especially ethyl.

It is also preferred that R¹ is -OCHF₂ or -CF₃.

Preferably, R² and R³ are independently hydrogen, optionally substituted phenyl or optionally substituted heteroaryl.

More preferably, R² and R³ are independently hydrogen, phenyl or
phenyl substituted by C₁-C₂alkyl, C₁-C₂haloalkyl, C₁-C₂alkoxy, C₁-C₂haloalkoxy, fluoro, chloro, bromo or cyano, heteroaryl or heteroaryl substituted by C₁-C₂alkyl, C₁-C₂haloalkyl, C₁-C₂alkoxy, C₁-C₂haloalkoxy, fluoro, chloro, bromo or cyano.

Preferred heteroaryls are thienyl, pyridyl, pyrimidinyl, pyrazolyl and thiazolyl.

It is particularly preferred, that R² is hydrogen and R³ is phenyl or phenyl substituted by C₁-C₂alkyl, C₁-C₂haloalkyl, C₁-C₂alkoxy, C₁-C₂haloalkoxy, fluoro, chloro, bromo or cyano.

Preferably, R⁴ is hydrogen, methyl, ethyl, vinyl or ethynyl and, more preferably, R⁴ is hydrogen, methyl or ethyl.

Preferably, R⁵ is hydrogen, C₁-C₄alkyl, C₁-C₄alkoxy or C₁-C₄alkoxyC₁-C₄alkyl and, more preferably, R⁵ is hydrogen or methyl, especially hydrogen.

Preferably, R⁶ is hydrogen or methyl and, more preferably, R⁶ is hydrogen.

Preferably, X is optionally substituted C₁-C₂alkylene.

More preferably X is methylene, ethylene, methylene substituted by C₁-C₃alkyl, C₁-C₃alkoxy or C₁-C₃alkoxy C₁-C₃alkyl or ethylene substituted by C₁-C₃alkyl, C₁-C₃alkoxy or C₁-C₃alkoxyC₁-C₃alkyl.

Most preferably, X is methylene or ethylene.

Preferably, Y is optionally substituted C₁-C₂alkylene or optionally substituted C₂alkenylene.

More preferably, Y is C₁-C₂alkylene or C₁-C₂alkylene substituted by halogen, hydroxyl, cyano, C₁-C₃alkyl, C₁-C₃alkoxy or C₁-C₃alkoxy C₁-C₃alkyl, C₂alkenylene or C₂alkenylene substituted by halogen, hydroxyl, cyano, C₁-C₃alkyl, C₁-C₃alkoxy or C₁-C₃alkoxy C₁-C₂alkyl, in particular ethylene or ethenylene.

In a very preferred group of compounds of the formula I, R¹ is methyl or ethyl, R² is hydrogen, R³ is phenyl or phenyl substituted by C₁-C₂alkyl, C₁-C₂alkoxy, C₁-C₂haloalkyl, C₁-C₂haloalkoxy, fluoro, chloro, bromo or cyano, R⁴ is hydrogen, R⁵ is hydrogen, R⁶ is hydrogen, X is methylene, Y is ethylene and G is hydrogen.

The compounds of the formula (I) are known compounds (WO 2008/145336).

The following compounds are preferred compounds:

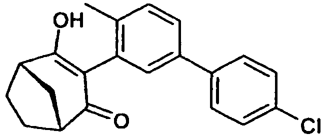

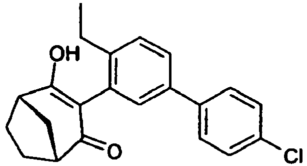

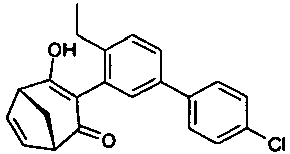

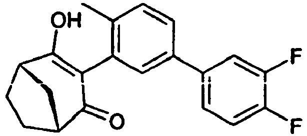

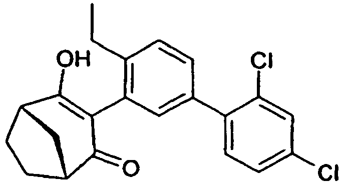

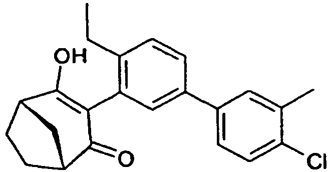

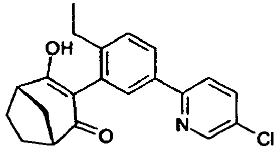

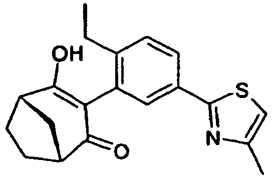

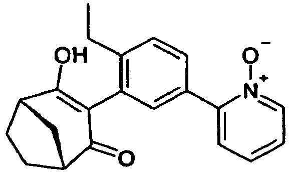

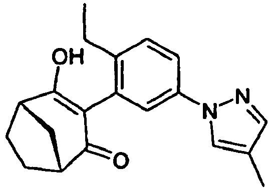

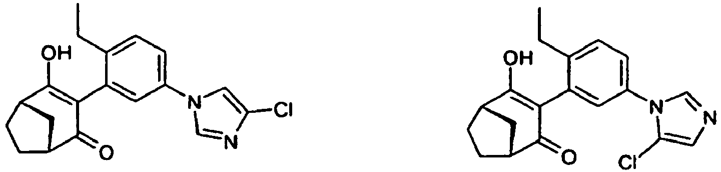

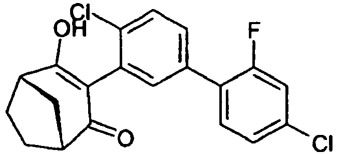

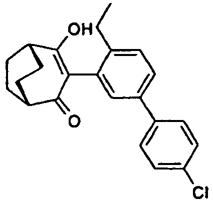

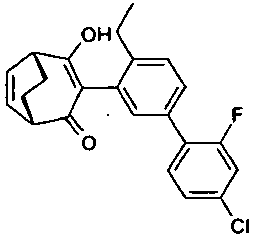

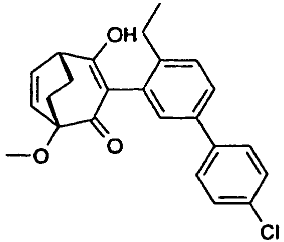

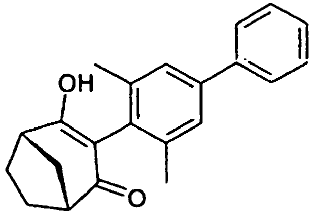

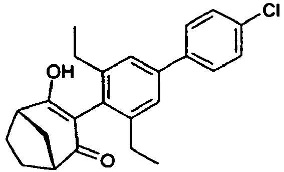

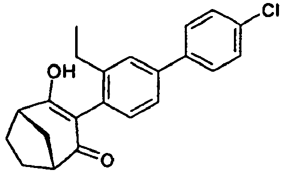

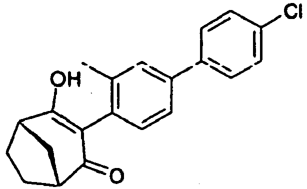

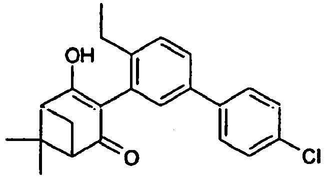

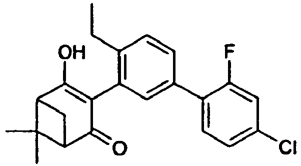

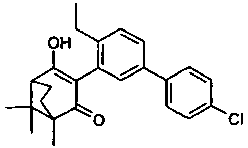

| Compound Number | Structure |
|---|---|
| T1 | 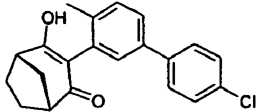 |
| T2 | 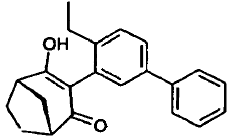 |
| T3 | 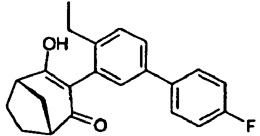 |
| T4 | 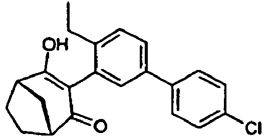 |
| T5 | |
| | 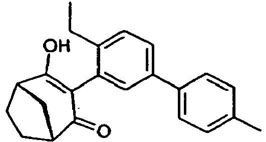 |
| T6 | 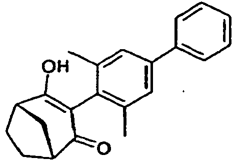 |
| T7 | 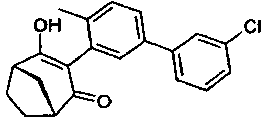 |
| T8 | 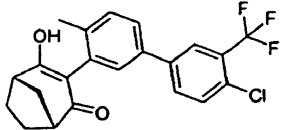 |
| T9 | 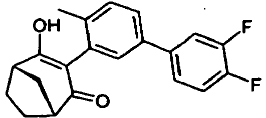 |
| | |
| T10 | 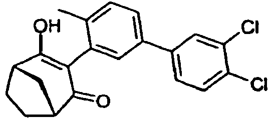 |
| T11 | 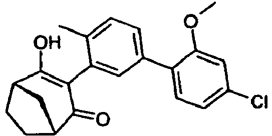 |
| T12 | 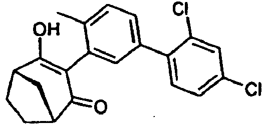 |
| T13 | 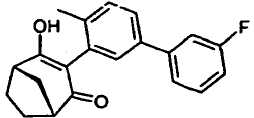 |
| | |
| T14 | 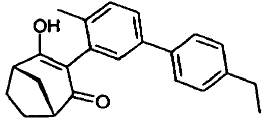 |
| T15 | 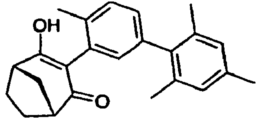 |
| T16 | 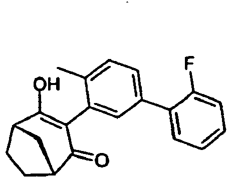 |
| T17 | 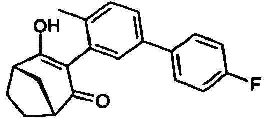 |
| | |
| T18 | 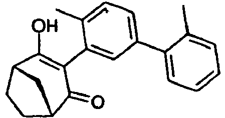 |
| T19 | 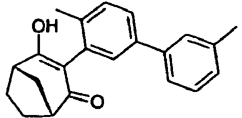 |
| T20 | 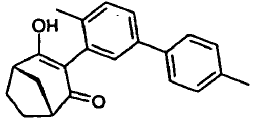 |
| T21 | 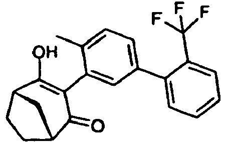 |
| | |
| T22 | 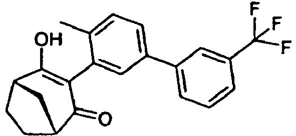 |
| T23 | 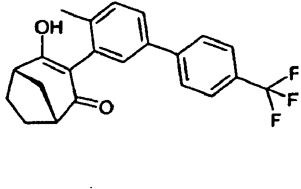 |
| T24 | 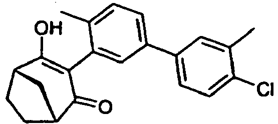 |
| T25 | 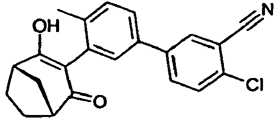 |
| T26 | 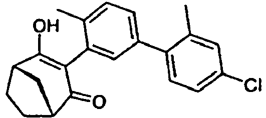 |
| T27 | 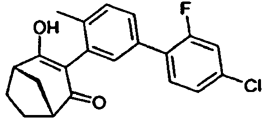 |
| T28 | 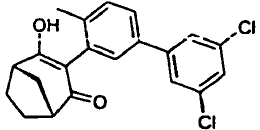 |
| | |
| T29 | 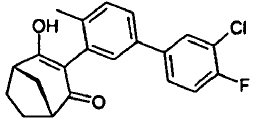 |
| T30 | 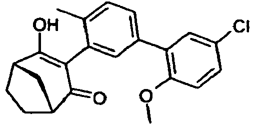 |
| T31 | 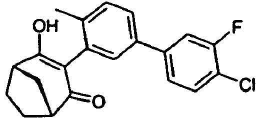 |
| T32 | 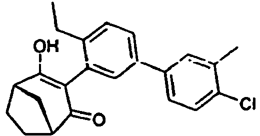 |
| | |
| T33 | 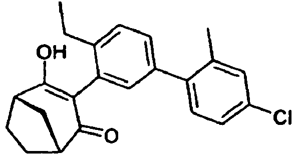 |
| T34 | 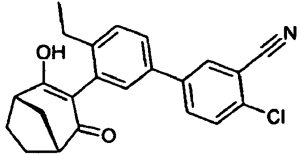 |
| T35 | 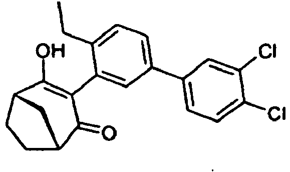 |
| T36 | 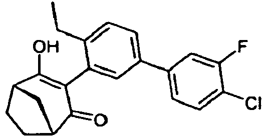 |
| T37 | 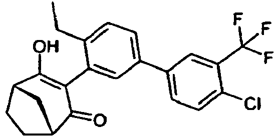 |
| T38 | 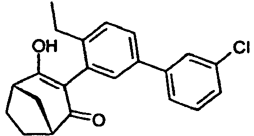 |
| T39 | 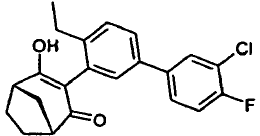 |
| | |
| T40 | 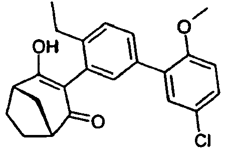 |
| T41 | 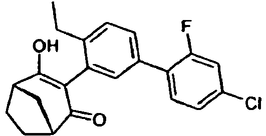 |
| T42 | 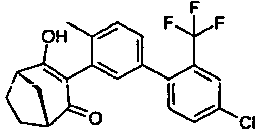 |
| T43 | 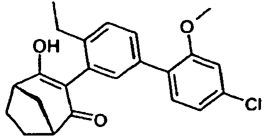 |
| T44 | 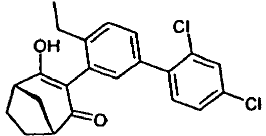 |
| T45 | 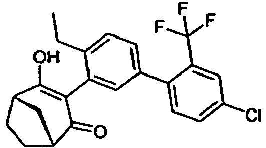 |
| T46 | 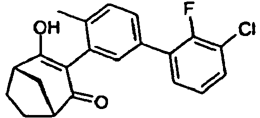 |
| | |
| T47 | 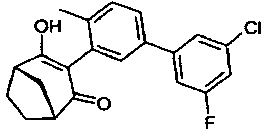 |
| T48 | 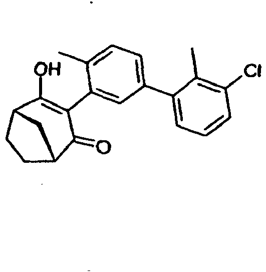 |
| T49 | 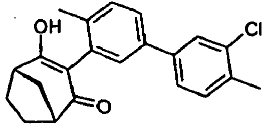 |
| T50 | 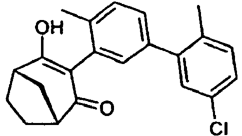 |
| T51 | 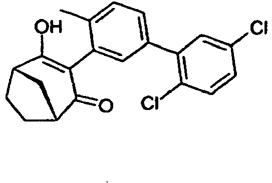 |
| T52 | 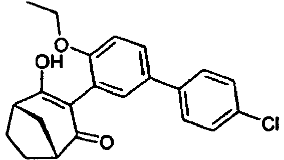 |
| T53 | 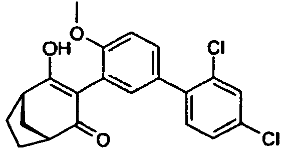 |
| T54 | 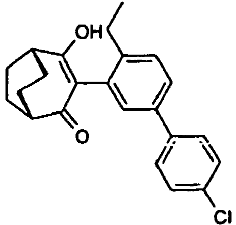 |
| T55 | 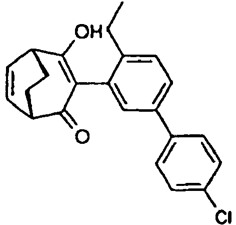 |
| T56 | 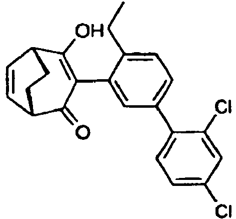 |
| T57 | 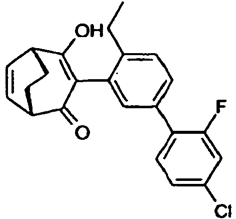 |
| T58 | 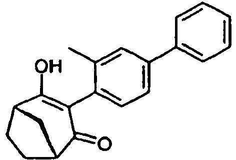 |
| T59 | 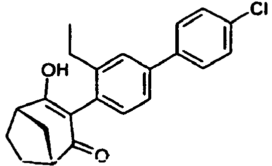 |
| T60 | 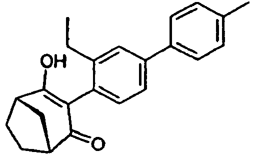 |
| T61 | 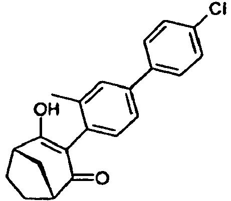 |
| T62 | 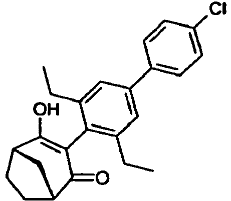 |
| T63 | 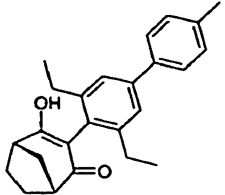 |
| T64 | 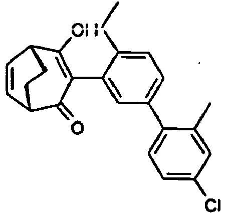 |
| T65 | 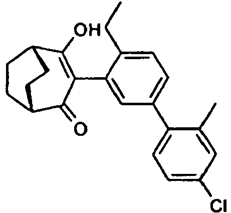 |
| T66 | 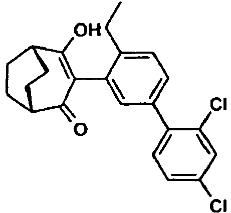 |
| T67 | 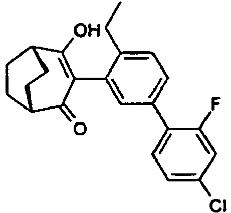 |
| T68 | 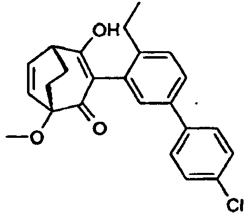 |
| T69 | 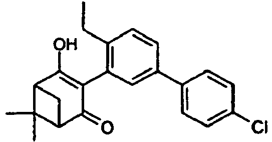 |
| T70 | 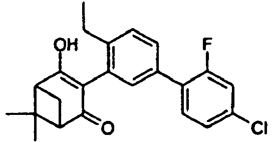 |
| T71 | 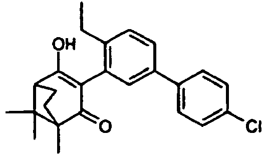 |
| T72 | 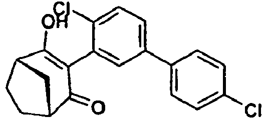 |
| T73 | 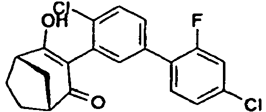 |
| T74 | 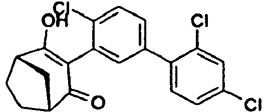 |
| T75 | 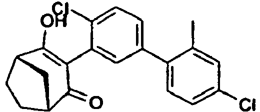 |
| T76 | 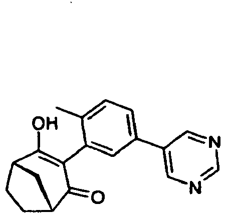 |
| T77 | 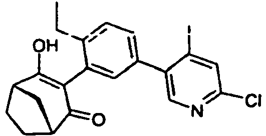 |
| | |
| T78 | 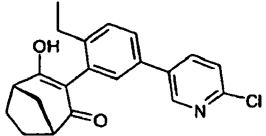 |
| T79 | 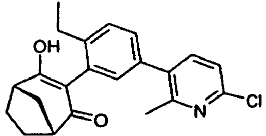 |
| T80 | 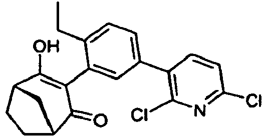 |
| T81 | 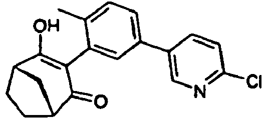 |
| | |
| T82 | 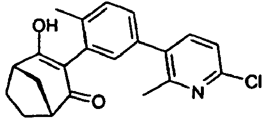 |
| T83 | 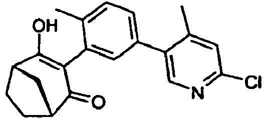 |
| T84 | 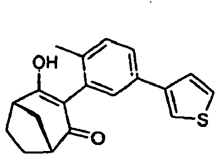 |
| T85 | 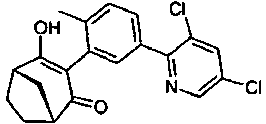 |
| T86 | 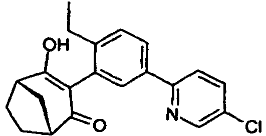 |
| T87 | 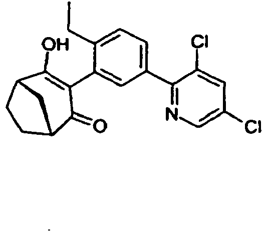 |
| T88 | 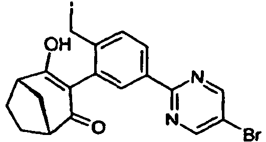 |
| | |
| T89 | 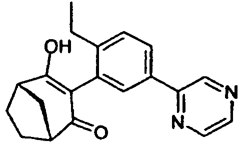 |
| T90 | 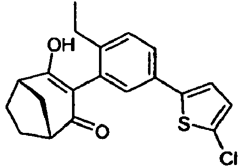 |
| T91 | 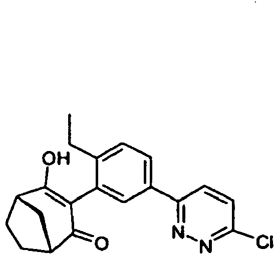 |
| T92 | 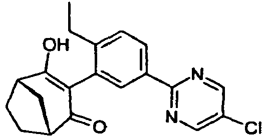 |
| T93 | 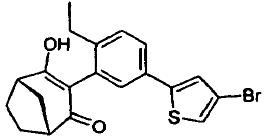 |
| T94 | 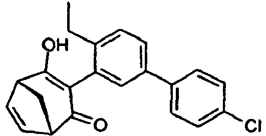 |
| T95 | 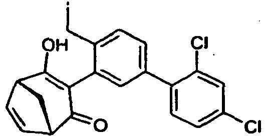 |
| | |
| T96 | 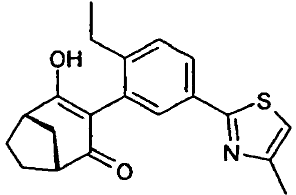 |
| T97 | 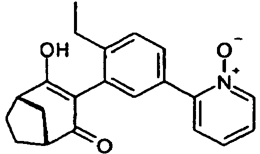 |
| T98 | 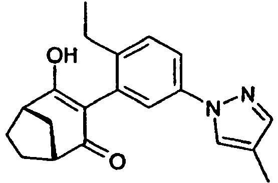 |
| T99 | 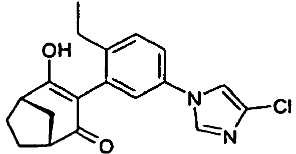 |
| | 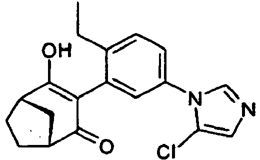 |
| T100 | 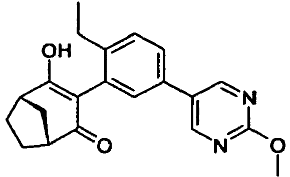 |
| T101 | 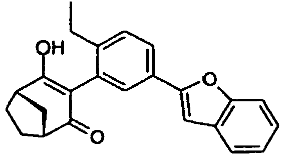 |
| T102 | 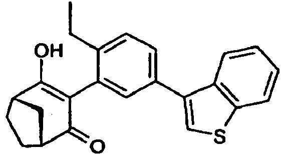 |
| T103 | 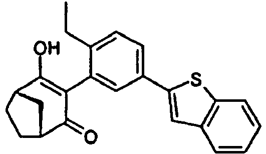 |
| T104 | 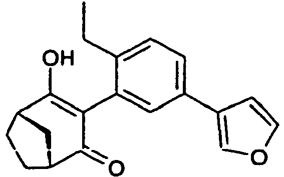 |
| T105 | 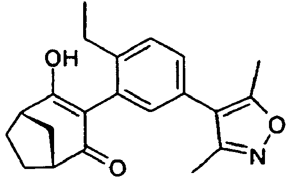 |
| T106 | 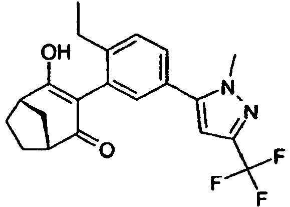 |
| T107 | 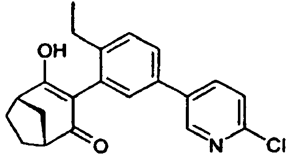 |
| T108 | 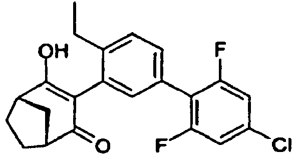 |
| T109 | 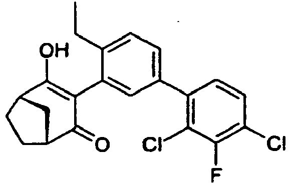 |
| T110 | 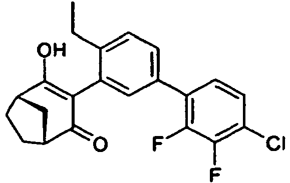 |
| T111 | 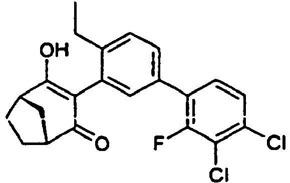 |
| T112 | 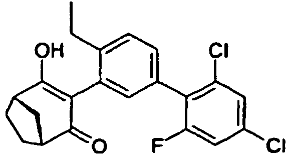 |
| T113 | 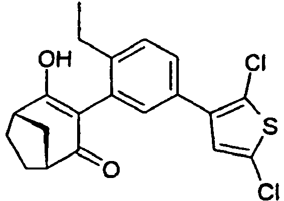 |

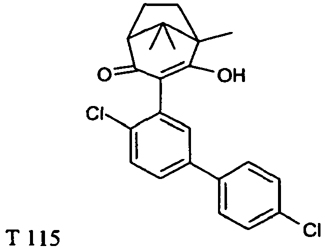

¹H NMR (400MHz, CDCl₃) d= 7.55-7.43 (m, 4H), 7.40-7.38 (m, 2H), 7.32-7.21 (m, 1H), 5.76-5.58 (m, 1H), 2.63-2.55 (m, 1H), 2.33-2.29 (m, 1H), 2.15-1.70 (m, 3H), 1.25-1.21 (m, 2H), 1.15-1.11 (m, 4H), 1.02 (s, 3H) ppm

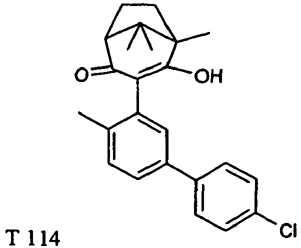

¹H NMR (400MHz, DMSO-d) d= 7.62-7.59 (dd, 2H), 7.48-7.45 (dd, 2H), 7.43-7.41 (d, 1H), 7.25-7.23 (d, 1H), 7.13-7.08 (dd, 1H), 2.61-2.60 (d, br., 1H), 2.30-2.20 (m, 1H), 2.11 (s, 1H), 2.01 (s, 2H), 1.95-1.80 (m, 1H), 1.75-1.60 (m, 2H), 1.07-0.94 (m, 10H) ppm

**Table 1:**

| This table covers 202 compounds of the formula I: | | |
|---|---|---|
| 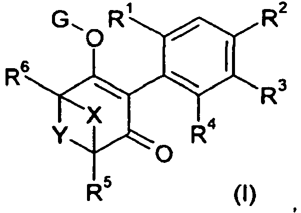 | | |
| wherein X is CH₂, Y is CH₂, R¹ is methyl, R⁴, R⁵ and R⁶ are hydrogen, G is hydrogen and R² and R³ are as defined below: | | |

| Compound Number | R² | R³ |
|---|---|---|
| 1.001 | phenyl | H |
| 1.002 | 2-fluorophenyl | H |
| 1.003 | 3-fluorophenyl | H |
| 1.004 | 4-fluorophenyl | H |
| 1.005 | 2-chlorophenyl | H |
| 1.006 | 3-chlorophenyl | H |
| 1.007 | 4-chlorophenyl | H |
| 1.008 | 2-bromophenyl | H |
| 1.009 | 3-bromophenyl | H |
| 1.010 | 4-bromophenyl | H |
| 1.011 | 2-methylphenyl | H |
| 1.012 | 3-methylphenyl | H |
| 1.013 | 4-methylphenyl | H |
| 1.014 | 2-cyanophenyl | H |
| 1.015 | 3-cyanophenyl | H |
| 1.016 | 4-cyanophenyl | H |
| 1.017 | 2-methoxyphenyl | H |
| 1.018 | 3-methoxyphenyl | H |
| 1.019 | 4-methoxyphenyl | H |
| 1.020 | 2-trifluoromethylphenyl | H |
| 1.021 | 3-trifluoromethylphenyl | H |
| 1.022 | 4-trifluoromethylphenyl | H |
| 1.023 | 4-trifluoromethoxyphenyl | H |
| 1.024 | 4-difluoromethoxyphenyl | H |
| 1.025 | 4-methylthiophenyl | H |
| 1.026 | 4-methylsulfinylphenyl | H |
| 1.027 | 4-methylsulfonylphenyl | H |
| 1.028 | 4-trifluoromethylthiophenyl | H |
| 1.029 | 4-trifluoromethylsulfinylphenyl | H |
| 1.030 | 4-trifluoromethylsulfonylphenyl | H |
| 1.031 | 2,3-difluorophenyl | H |
| 1.032 | 2,4-difluorophenyl | H |
| 1.033 | 2,5-difluorophenyl | H |
| 1.034 | 2,6-difluorophenyl | H |
| 1.035 | 3,4-difluorophenyl | H |
| 1.036 | 3,5-difluorophenyl | H |
| 1.037 | 2,3-dichlorophenyl | H |
| 1.038 | 2,4-dichlorophenyl | H |
| 1.039 | 2,5-dichlorophenyl | H |
| 1.040 | 2,6-dichlorophenyl | H |
| 1.041 | 3,4-dichlorophenyl | H |
| 1.042 | 3,5-dichlorophenyl | H |
| 1.043 | 2,3,4-trichlorophenyl | H |
| 1.044 | 2,3,5-trichlorophenyl | H |
| 1.045 | 2,3,6-trichlorophenyl | H |
| 1.046 | 2,4,5-trichlorophenyl | H |
| 1.047 | 2,4,6-trichlorophenyl | H |
| 1.048 | 3,4,5-trichlorophenyl | H |
| 1.049 | 4-chloro-2-fluorophenyl | H |
| 1.050 | 4-chloro-3-fluorophenyl | H |
| 1.051 | 4-chloro-2-methylphenyl | H |
| 1.052 | 4-chloro-3-methylphenyl | H |
| 1.053 | 4-chloro-2-trifluoromethylphenyl | H |
| 1.054 | 4-chloro-3-trifluoromethylphenyl | H |
| 1.055 | 4-chloro-2-cyanophenyl | H |
| 1.056 | 4-chloro-3-cyanophenyl | H |
| 1.057 | 4-chloro-2-methoxyphenyl | H |
| 1.058 | 4-chloro-3-methoxyphenyl | H |
| 1.059 | 4-fluoro-2-chlorophenyl | H |
| 1.060 | 4-fluoro-3-chlorophenyl | H |
| 1.061 | 4-fluoro-2-methylphenyl | H |
| 1.062 | 4-fluoro-3-methylphenyl | H |
| 1.063 | 4-fluoro-2-trifluoromethylphenyl | H |
| 1.064 | 4-fluoro-3-trifluoromethylphenyl | H |
| 1.065 | 2-fluoro-4-trifluoromethylphenyl | H |
| 1.066 | 3-fluoro-4-trifluoromethylphenyl | H |
| 1.067 | 3,4-methylenedioxyphenyl | H |
| 1.068 | benzo[1,3]diox-5-yl | H |
| 1.069 | 2,3-dihydrobenzo[1,4]dioxin-6-yl | H |
| 1.070 | 2-pyridyl | H |
| 1.071 | 3-pyridyl | H |
| 1.072 | 4-pyridyl | H |
| 1.073 | 3-chloropyridin-2-yl | H |
| 1.074 | 4-chloropyridin-2-yl | H |
| 1.075 | 5-chloropyridin-2-yl | H |
| 1.076 | 6-chloropyridin-2-yl | H |
| 1.077 | 2-chloropyridin-3-yl | H |
| 1.078 | 4-chloropyridin-3-yl | H |
| 1.079 | 2-chloropyridin-4-yl | H |
| 1.080 | 3-chloropyridin-4-yl | H |
| 1.081 | 2-chloropyridin-5-vl | H |
| 1.082 | 3-chloropyridin-5-yl | H |
| 1.083 | 3-methylpyridin-2-yl | H |
| 1.084 | 4-methylpyridin-2-yl | H |
| 1.085 | 5-methylpyridin-2-yl | H |
| 1.086 | 6-methypyridin-2-yl | H |
| 1.087 | 2-methylpyridin-3-yl | H |
| 1.088 | 4-methylpyridin-3-yl | H |
| 1.089 | 2-methylpyridin-4-yl | H |
| 1.090 | 3-methylpyridin-4-yl | H |
| 1.091 | 2-methylpyridin-5-yl | H |
| 1.092 | 3-methylpyridinyl-5-yl | H |
| 1.093 | 2-trifluoromethylpyridin-5-yl | H |
| 1.094 | 3-trifluoromethylpyridin-5-yl | H |
| 1.095 | 2,6-dichloropyridin-3-yl | H |
| 1.096 | 2-chloro-4-methylpyridin-5-yl | H |
| 1.097 | 6-chloro-2-methylpyridin-3-yl | H |
| 1.098 | 5-chlorothiophen-2-yl | H |
| 1.099 | 2-chlorothiophen-3-yl | H |
| 1.100 | 1-methylpyrazol-4-yl | H |
| 1.101 | 4-chloropyrazol-1-yl | H |
| 1.102 | H | phenyl |
| 1.103 | H | 2-fluorophenyl |
| 1.104 | H | 3-fluorophenyl |
| 1.105 | H | 4-fluorophenyl. |
| 1.106 | H | 2-chlorophenyl |
| 1.107 | H | 3-chlorophenyl |
| 1.108 | H | 4-chlorophenyl |
| 1.109 | H | 2-bromophenyl |
| 1.110 | H | 3-bromophenyl |
| 1.111 | H | 4-bromophenyl |
| 1.112 | H | 2-methylphenyl |
| 1.113 | H | 3-methylphenyl |
| 1.114 | H | 4-methylphenyl |
| 1.115 | H | 2-cyanophenyl |
| 1.116 | H | 3-cyanophenyl |
| 1.117 | H | 4-cyanophenyl |
| 1.118 | H | 2-methoxyphenyl |
| 1.119 | H | 3-methoxyphenyl |
| 1.120 | H | 4-methoxyphenyl |
| 1.121 | H | 2-trifluoromethylphenyl |
| 1.122 | H | 3-trifluoromethylphenyl |
| 1.123 | H | 4-trifluoromethylphenyl |
| 1.124 | H | 4-trifluoromethoxyphenyl |
| 1.125 | H | 4-difluoromethoxyphenyl |
| 1.126 | H | 4-methylthiophenyl |
| 1.127 | H | 4-methylsulfinylphenyl |
| 1.128 | H | 4-methylsufonylphenyl |
| 1.129 | H | 4-trifluoromethylthiophenyl |
| 1.130 | H | 4-trifluoromethylsulfinylphenyl |
| 1.131 | H | 4-trifluoromethylsulfonylphenyl |
| 1.132 | H | 2,3-difluorophenyl |
| 1.133 | H | 2,4-difluorophenyl |
| 1.134 | H | 2,5-difluorophenyl |
| 1.135 | H | 2,6-difluorophenyl |
| 1.136 | H | 3,4-difluorophenyl |
| 1.137 | H | 3,5-difluorophenyl |
| 1.138 | H | 2,3-dichlorophenyl |
| 1.139 | H | 2,4-dichlorophenyl |
| 1.140 | H | 2,5-dichlorophenyl |
| 1.141 | H | 2,6-dichlorophenyl |
| 1.142 | H | 3.4-dichlorophenyl |
| 1.143 | H | 3,5-dichlorophenyl |
| 1.144 | H | 2,3,4-trichlorophenyl |
| 1.145 | H | 2,3,5-trichlorophenyl |
| 1.146 | H | 2,3,6-trichlorophenyl |
| 1.147 | H | 2,4,5-trichlorophenyl |
| 1.148 | H | 2,4,6-trichlorophenyl |
| 1.149 | H | 3,4,5-trichlorophenyl |
| 1.150 | H | 4-chloro-2-fluorophenyl |
| 1.151 | H | 4-chloro-3-fluorophenyl |
| 1.152 | H | 4-chloro-2-methylphenyl |
| 1.153 | H | 4-chloro-3-methylphenyl |
| 1.154 | H | 4-chloro-2-trifluoromethylphenyl |
| 1.155 | H | 4-chloro-3-trifluoromethylphenyl |
| 1.156 | H | 4-chloro-2-cyanophenyl |
| 1.157 | H | 4-chloro-3-cyanophenyl |
| 1.158 | H | 4-chloro-2-methoxyphenyl |
| 1.159 | H | 4-chloro-3-methoxyphenyl |
| 1.160 | H | 4-fluoro-2-chlorophenyl |
| 1.161 | H | 4-fluoro-3-chlorophenyl |
| 1.162 | H | 4-fluoro-2-methylphenyl |
| 1.163 | H | 4-fluoro-3-methylphenyl |
| 1.164 | H | 4-fluoro-2-trifluoromethylphenyl |
| 1.165 | H | 4-fluoro-3-trifluoromethylphenyl |
| 1.166 | H | 2-fluoro-4-trifluoromethylphenyl |
| 1.167 | H | 3-fluoro-4-trifluoromethylphenyl |
| 1.168 | H | 3,4-methylenedioxyphenyl |
| 1.169 | H | benzo[1,3]diox-5-yl |
| 1.170 | H | 2,3-dihydrobenzo[1,4]dioxin-6-yl |
| 1.171 | H | 2-pyridyl |
| 1.172 | H | 3-pyridyl |
| 1.173 | H | 4-pyridyl |
| 1.174 | H | 3-chloropyridin-2-yl |
| 1.175 | H | 4-chloropyridin-2-yl |
| 1.176 | H | 5-chloropyridin-2-yl |
| 1.177 | H | 6-chloropyridin-2-yl |
| 1.178 | H | 2-chloropyridin-3-yl |
| 1.179 | H | 4-chloropyridin-3-yl |
| 1.180 | H | 2-chloropyridin-4-yl |
| 1.181 | H | 3-chloropyridin-4-yl |
| 1.182 | H | 2-chloropyridin-5-yl |
| 1.183 | H | 3-chloropyridin-5-yl |
| 1.184 | H | 3-methylpyridin-2-yl |
| 1.185 | H | 4-methylpyridin-2-yl |
| 1.186 | H | 5-methylpyridin-2-yl |
| 1.187 | H | 6-methylpyridin-2-yl |
| 1.188 | H | 2-methylpyridin-3-yl |
| 1.189 | H | 4-methylpyridin-3-yl |
| 1.190 | H | 2-methylpyridin-4-yl |
| 1.191 | H | 3-methylpyridin-4-yl |
| 1.192 | H | 2-methylpyridin-5-yl |
| 1.193 | H | 3-methylpyridinyl-5-yl |
| 1.194 | H | 2-trifluoromethylpyridin-5-yl |
| 1.195 | H | 3-trifluoromethylpyridin-5-yl |
| 1.196 | H | 2,6-dichloropyridin-3-yl |
| 1.197 | H | 2-chloro-4-methylpyridin-5-yl |
| 1.198 | H | 6-chloro-2-methylpyridin-3-yl |
| 1.199 | H | 5-chlorothiophen-2-yl |
| 1.200 | H | 2-chlorothiophen-3-yl |
| 1.201 | H | 1-methylpyrazol-4-yl |
| 1.202 | H | 4-chloropyrazol-1-yl |
| 1.203 | CH₃ | phenyl |
| 1.204 | CH₃ | 2-fluorophenyl |
| 1.205 | CH₃ | 3-fluorophenyl |
| 1.206 | CH₃ | 4-fluorophenyl |
| 1.207 | CH₃ | 2-chlorophenyl |
| 1.208 | CH₃ | 3-chlorophenyl |
| 1.209 | CH₃ | 4-chlorophenyl |
| 1.210 | CH₃ | 2-bromophenyl |
| 1.211 | CH₃ | 3-bromophenyl |
| 1.212 | CH₃ | 4-bromophenyl |
| 1.213 | CH₃ | 2-methylphenyl |
| 1.214 | CH₃ | 3-methylphenyl |
| 1.215 | CH₃ | 4-methylphenyl |
| 1.216 | CH₃ | 2-cyanophenyl |
| 1.217 | CH₃ | 3-cyanophenyl |
| 1.218 | CH₃ | 4-cyanophenyl |
| 1.219 | CH₃ | 2-methoxyphenyl |
| 1.220 | CH₃ | 3-methoxyphenyl |
| 1.221 | CH₃ | 4-methoxyphenyl |
| 1.222 | CH₃ | 2-trifluoromethylphenyl |
| 1.223 | CH₃ | 3-trifluoromethylphenyl |
| 1.224 | CH₃ | 4-trifluoromethylphenyl |
| 1.225 | CH₃ | 4-trifluoromethoxyphenyl |
| 1.226 | CH₃ | 4-difluoromethoxyphenyl |
| 1.227 | CH₃ | 4-methylthiophenyl |
| 1.228 | CH₃ | 4-methylsulfinylphenyl |
| 1.229 | CH₃ | 4-methylsulfonylphenyl |
| 1.230 | CH₃ | 4-trifluoromethylthiophenyl |
| 1.231 | CH₃ | 4-trifluoromethylsulfinylphenyl |
| 1.232 | CH₃ | 4-trifluoromethylsulfonylphenyl |
| 1.233 | CH₃ | 2,3-difluorophenyl |
| 1.234 | CH₃ | 2,4-difluorophenyl |
| 1.235 | CH₃ | 2,5-difluorophenyl |
| 1.236 | CH₃ | 2,6-difluorophenyl |
| 1.237 | CH₃ | 3,4-difluorophenyl |
| 1.238 | CH₃ | 3,5-difluorophenyl |
| 1.239 | CH₃ | 2,3-dichlorophenyl |
| 1.240 | CH₃ | 2,4-dichlorophenyl |
| 1.241 | CH₃ | 2,5-dichlorophenyl |
| 1.242 | CH₃ | 2,6-dichlorophenyl |
| 1.243 | CH₃ | 3,4-dichlorophenyl |
| 1.244 | CH₃ | 3,5-dichlorophenyl |
| 1.245 | CH₃ | 2,3,4-trichlorophenyl |
| 1.246 | CH₃ | 2,3,5-trichlorophenyl |
| 1.247 | CH₃ | 2,3,6-trichlorophenyl |
| 1.248 | CH₃ | 2,4,5-trichlorophenyl |
| 1.249 | CH₃ | 2,4,6-trichlorophenyl |
| 1.250 | CH₃ | 3,4,5-trichlorophenyl |
| 1.251 | CH₃ | 4-chloro-2-fluorophenyl |
| 1.252 | CH₃ | 4-chloro-3-fluorophenyl |
| 1.253 | CH₃ | 4-chloro-2-methylphenyl |
| 1.254 | CH₃ | 4-chloro-3-methylphenyl |
| 1.255 | CH₃ | 4-chloro-2-trifluoromethylphenyl |
| 1.256 | CH₃ | 4-chloro-3-trifluoromethylphenyl |
| 1.257 | CH₃ | 4-chloro-2-cyanophenyl |
| 1.258 | CH₃ | 4-chloro-3-cyanophenyl |
| 1.259 | CH₃ | 4-chloro-2-methoxyphenyl |
| 1.260 | CH₃ | 4-chloro-3-methoxyphenyl |
| 1.261 | CH₃ | 4-fluoro-2-chlorophenyl |
| 1.262 | CH₃ | 4-fluoro-3-chlorophenyl |
| 1.263 | CH₃ | 4-fluroro-2-methylphenyl |
| 1.264 | CH₃ | 4-fluoro-3-methylphenyl |
| 1.265 | CH₃ | 4-fluoro-2-trifluoromethylphenyl |
| 1.266 | CH₃ | 4-fluoro-3-trifluoromethylphenyl |
| 1.267 | CH₃ | 2-fluoro-4-trifluoromethylphenyl |
| 1.268 | CH₃ | 3-fluoro-4-trifluoromethylphenyl |
| 1.269 | CH₃ | 3,4-methylenedioxyphenyl |
| 1.270 | CH₃ | benzo[1,3]diox-5-yl |
| 1.271 | CH₃ | 2,3-dihydrobenzo[1,4]dioxin-6-yl |
| 1.272 | CH₃ | 2-pyridyl |
| 1.273 | CH₃ | 3-pyridyl |
| 1.274 | CH₃ | 4-pyridyl |
| 1.275 | CH₃ | 3-chloropyridin-2-yl |
| 1.276 | CH₃ | 4-chloropyridin-2-yl |
| 1.277 | CH₃ | 5-chloropyridin-2-yl |
| 1.278 | CH₃ | 6-chloropyridin-2-yl |
| 1.279 | CH₃ | 2-chloropyridin-3-yl |
| 1.280 | CH₃ | 4-chloropyridin-3-yl |
| 1.281 | CH₃ | 2-chloropyridin-4-yl |
| 1.282 | CH₃ | 3-chloropyridin-4-yl |
| 1.283 | CH₃ | 2-chloropyridin-5-yl |
| 1.284 | CH₃ | 3-chloropyridin-5-yl |
| 1.285 | CH₃ | 3-methylpyridin-2-yl |
| 1.286 | CH₃ | 4-methylpyridin-2-yl |
| 1.287 | CH₃ | 5-methylpyridin-2-yl |
| 1.288 | CH₃ | 6-methylpyridin-2-yl |
| 1.289 | CH₃ | 2-methylpyridin-3-yl |
| 1.290 | CH₃ | 4-methylpyridin-3-yl |
| 1.291 | CH₃ | 2-methylpyridin-4-yl |
| 1.292 | CH₃ | 3-methylpyridin-4-yl |
| 1.293 | CH₃ | 2-methylpyridin-5-yl |
| 1.294 | CH₃ | 3-methylpyridin-5-yl |
| 1.295 | CH₃ | 2-trifluoromethylpyridin-5-yl |
| 1.296 | CH₃ | 3-trifluoromethylpyridin-5-yl |
| 1.297 | CH₃ | 2,6-dichloropyridin-3-yl |
| 1.298 | CH₃ | 2-chloro-4-methylpyridin-5-yl |
| 1.299 | CH₃ | 6-chloro-2-methylpyridin-3-yl |
| 1.300 | CH₃ | 5-chlorothiophen-2-yl |
| 1.301 | CH₃ | 2-chlorothiophen-3-yl |
| 1.302 | CH₃ | 1-methylpyrazol-4-yl |
| 1.303 | CH₃ | 4-chloropyrazol-1-yl |

### Table 2

This table covers 303 compounds of formula I, wherein X is CH₂, Y is CH₂, R¹ is ethyl, R⁴, R⁵ and R⁶ are hydrogen, G is hydrogen and R² and R³ are as defined in Table 1.

### Table 3

This table covers 303 compounds of formula I, wherein X is CH₂, Y is CH₂, R¹ and R⁴ are methyl, R⁵ and R⁶ are hydrogen, G is hydrogen and R² and R³ are as defined in Table 1.

### Table 4

This table covers 303 compounds of formula I, wherein X is CH₂, Y is CH₂, R¹ is ethyl, R⁴ is methyl, R⁵ and R⁶ are hydrogen, G is hydrogen and R² and R³ are as defined in Table 1.

### Table 5

This table covers 303 compounds of formula I, wherein X is CH₂, Y is CH₂, R¹ and R⁴ are ethyl, R⁵ and R⁶ are hydrogen, G is hydrogen and R² and R³ are as defined in Table 1.

### Table 6

This table covers 303 compounds of formula I, wherein X is CH₂, Y is C(CH₃)₂ , R¹ is methyl, R⁴, R⁵ and R⁶ are hydrogen, G is hydrogen and R² and R³ are as defined in Table 1.

### Table 7

This table covers 303 compounds of formula I, wherein X is CH₂, Y is C(CH₃)₂, R¹ is ethyl, R⁴, R⁵ and R⁶ are hydrogen, G is hydrogen and R² and R³ are as defined in Table 1.

### Table 8

This table covers 303 compounds of formula I, wherein X is CH₂, Y is C(CH₃)₂, R¹ and R⁴ are methyl, R⁵ and R⁶ are hydrogen, G is hydrogen and R² and R³ are as defined in Table 1.

### Table 9

This table covers 303 compounds of formula I, wherein X is CH₂, Y is C(CH₃)₂, R¹ is ethyl, R⁴ is methyl, R⁵ and R⁶ are hydrogen, G is hydrogen and R² and R³ are as defined in Table 1.

### Table 10

This table covers 303 compounds of formula I, wherein X is CH₂, Y is C(CH₃)₂, R¹ and R⁴ are ethyl, R⁵ and R⁶ are hydrogen, G is hydrogen and R² and R³ are as defined in Table 1.

### Table 11

This table covers 303 compounds of formula I, wherein X is CH₂, Y is CH=CH, R¹ is methyl, R⁴, R⁵ and R⁶ are hydrogen, G is hydrogen and R² and R³ are as defined in Table 1.

### Table 12

This table covers 303 compounds of formula I, wherein X is CH₂, Y is CH=CH, R¹ is ethyl, R⁴, R⁵ and R⁶ are hydrogen, G is hydrogen and R² and R³ are as defined in Table 1.

### Table 13

This table covers 303 compounds of formula I, wherein X is CH₂, Y is CH=CH, R¹ and R⁴ are methyl, R⁵ and R⁶ are hydrogen, G is hydrogen and R² and R³ are as defined in Table 1.

### Table 14

This table covers 303 compounds of formula I, wherein X is CH₂, Y is CH=CH, R¹ is ethyl, R⁴ is methyl, R⁵ and R⁶ are hydrogen, G is hydrogen and R² and R³ are as defined in Table 1.

### Table 15

This table covers 303 compounds of formula I, wherein X is CH₂, Y is CH=CH, R¹ and R⁴ are ethyl, R⁵ and R⁶ are hydrogen, G is hydrogen and R² and R³ are as defined in Table 1.

### Table 16

This table covers 303 compounds of formula I, wherein X is CH₂, Y is CH₂-CH₂, R¹ is methyl, R⁴, R⁵ and R⁶ are hydrogen, G is hydrogen and R² and R³ are as defined in Table 1.

### Table 17

This table covers 303 compounds of formula I, wherein X is CH₂, Y is CH₂-CH₂, R¹ is ethyl, R⁴, R⁵ and R⁶ are hydrogen, G is hydrogen and R² and R³ are as defined in Table 1.

### Table 18

This table covers 303 compounds of formula I, wherein X is CH₂, Y is CH₂-CH₂, R¹ and R⁴ are methyl, R⁵ and R⁶ are hydrogen, G is hydrogen and R² and R³ are as defined in Table 1.

### Table 19

This table covers 303 compounds of formula I, wherein X is CH₂, Y is CH₂-CH₂, R¹ is ethyl, R⁴ is methyl, R⁵ and R⁶ are hydrogen, G is hydrogen and R² and R³ are as defined in Table 1.

### Table 20

This table covers 303 compounds of formula I, wherein X is CH₂, Y is CH₂-CH₂, R¹ and R⁴ are ethyl, R⁵ and R⁶ are hydrogen, G is hydrogen and R² and R³ are as defined in Table 1.

### Table 21

This table covers 303 compounds of formula I, wherein X is CH₂-CH₂, Y is CH=CH, R¹ is methyl, R⁴, R⁵ and R⁶ are hydrogen, G is hydrogen and R² and R³ are as defined in Table 1.

### Table 22

This table covers 303 compounds of formula I, wherein X is CH₂-CH₂, Y is CH=CH, R¹ is ethyl, R⁴, R⁵ and R⁶ are hydrogen, G is hydrogen and R² and R³ are as defined in Table 1.

### Table 23

This table covers 303 compounds of formula I, wherein X is CH₂-CH₂, Y is CH=CH, R¹ and R⁴ are methyl, R⁵ and R⁶ are hydrogen, G is hydrogen and R² and R³ are as defined in Table 1.

### Table 24

This table covers 303 compounds of formula I, wherein X is CH₂-CH₂, Y is CH=CH, R¹ is ethyl, R⁴ is methyl, R⁵ and R⁶ are hydrogen, G is hydrogen and R² and R³ are as defined in Table 1.

### Table 25

This table covers 303 compounds of formula I, wherein X is CH₂-CH₂, Y is CH=CH, R¹ and R⁴ are ethyl, R⁵ and R⁶ are hydrogen, G is hydrogen and R² and R³ are as defined in Table 1.

### Table 26

This table covers 303 compounds of formula I, wherein X is CH₂-CH₂, Y is CH₂-CH₂, R¹ is methyl, R⁴, R⁵ and R⁶ are hydrogen, G is hydrogen and R² and R³ are as defined in Table 1.

### Table 27

This table covers 303 compounds of formula I, wherein X is CH₂-CH₂, Y is CH₂-CH₂, R¹ is ethyl, R⁴, R⁵ and R⁶ are hydrogen, G is hydrogen and R² and R³ are as defined in Table 1.

### Table 28

This table covers 303 compounds of formula I, wherein X is CH₂-CH₂, Y is CH₂-CH₂, R¹ and R⁴ are methyl, R⁵ and R⁶ are hydrogen, G is hydrogen and R² and R³ are as defined in Table 1.

### Table 29

This table covers 303 compounds of formula I, wherein X is CH₂-CH₂, Y is CH₂-CH₂, R¹ is ethyl, R⁴ is methyl, R⁵ and R⁶ are hydrogen, G is hydrogen and R² and R³ are as defined in Table 1.

### Table 30

This table covers 303 compounds of formula I, wherein X is CH₂-CH₂, Y is CH₂-CH₂, R¹ and R⁴ are ethyl, R⁵ and R⁶ are hydrogen, G is hydrogen and R² and R³ are as defined in Table 1.

### Table 31

This table covers 303 compounds of formula I, wherein X is CH₂-CH₂, Y is C(CH₃)₂, R¹ is methyl, R⁴ and R⁵ are hydrogen, R⁶ is methyl, G is hydrogen and R² and R³ are as defined in Table 1.

### Table 32

This table covers 303 compounds of formula I, wherein X is CH₂-CH₂, Y is C(CH₃)₂, R¹ is ethyl, R⁴ and R⁵ are hydrogen, R⁶ is methyl, G is hydrogen and R² and R³ are as defined in Table 1.

### Table 33

This table covers 303 compounds of formula I, wherein X is CH₂-CH₂, Y is C(CH₃)₂, R¹ and R⁴ are methyl, R⁵ is hydrogen, R⁶ is methyl, G is hydrogen and R² and R³ are as defined in Table 1.

### Table 34

This table covers 303 compounds of formula I, wherein X is CH₂-CH₂, Y is C(CH₃)₂, R¹ is ethyl, R⁴ is methyl, R⁵ is hydrogen, R⁶ is methyl, G is hydrogen and R² and R³ are as defined in Table 1.

### Table 35

This table covers 303 compounds of formula I, wherein X is CH₂-CH₂, Y is C(CH₃)₂, R¹ and R⁴ are ethyl, R⁵ is hydrogen, R⁶ is methyl, G is hydrogen and R² and R³ are as defined in Table 1.

### Table 36

This table covers 303 compounds of formula I, wherein X is CH₂, Y is CH₂, R¹ is chloro, R⁴, R⁵ and R⁶ are hydrogen, G is hydrogen and R² and R³ are as defined in Table 1.

### Table 37

This table covers 303 compounds of formula I, wherein X is CH₂, Y is C(CH₃)₂, R¹ is chloro, R⁴, R⁵ and R⁶ are hydrogen, G is hydrogen and R² and R³ are as defined in Table 1.

### Table 38

This table covers 303 compounds of formula I, wherein X is CH₂, Y is CH=CH, R¹ is chloro, R⁴, R⁵ and R⁶ are hydrogen, G is hydrogen and R² and R³ are as defined in Table 1.

### Table 39

This table covers 303 compounds of formula I, wherein X is CH₂, Y is CH₂-CH₂, R¹ is chloro, R⁴, R⁵ and R⁶ are hydrogen, G is hydrogen and R² and R³ are as defined in Table 1.

### Table 40

This table covers 303 compounds of formula I, wherein X is CH₂-CH₂, Y is CH=CH, R¹ is chloro, R⁴, R⁵ and R⁶ are hydrogen, G is hydrogen and R² and R³ are as defined in Table 1.

### Table 41

This table covers 303 compounds of formula I, wherein X is CH₂-CH₂, Y is CH₂-CH₂, R1 is chloro, R⁴, R⁵ and R⁶ are hydrogen, G is hydrogen and R² and R³ are as defined in Table 1.

### Table 42

This table covers 303 compounds of formula I, wherein X is CH₂-CH₂, Y is C(CH₃)₂, R¹ is chloro, R⁴ and R⁵ are hydrogen, R⁶ is methyl, G is hydrogen and R² and R³ are as defined in Table 1.

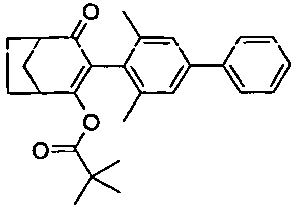

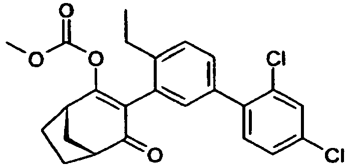

| Compound Number | Structure |
|---|---|
| P1 | 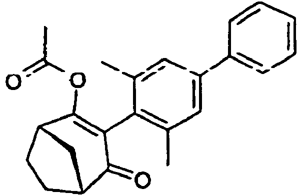 |
| P2 | 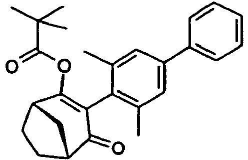 |
| P3 | 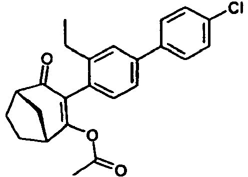 |
| P4 | 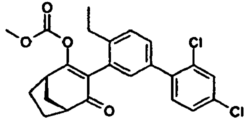 |
| P7 | 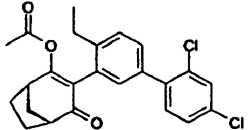 |
| P8 | 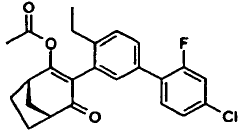 |
| P9 | 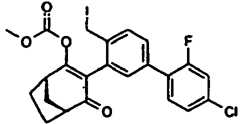 |
| P10 | 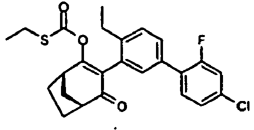 |
| P11 | 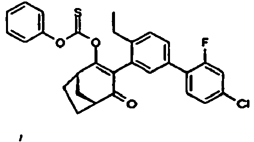 |
| P12 | 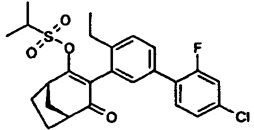 |
| P13 | 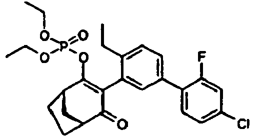 |

The active compounds of the invention, in combination with good plant tolerance and favourable toxicity to warm-blooded animals and being tolerated well by the environment, are suitable for protecting plants and plant organs, for increasing harvest yields, for improving the quality of the harvested material and for controlling animal pests, in particular insects, arachnids, helminths, nematodes and molluscs, which are encountered in agriculture, in horticulture, in animal husbandry, in forests, in gardens and leisure facilities, in the protection of stored products and of materials, and in the hygiene sector. They can be preferably employed as plant protection agents. They are active against normally sensitive and resistant species and against all or some stages of development. The abovementioned pests include:
From the phylum of Mollusca e.g. from the class of the Lamellibranchiata e.g. Dreissena spp.
From the class of the Gastropoda e.g. Arion spp., Biomphalaria spp., Bulinus spp., Deroceras spp., Galba spp., Lymnaea spp., Oncomelania spp., Pomacea spp., Succinea spp..
From the phylum: Arthropoda e.g. from the order of Isopoda e.g. Armadillidium vulgare, Oniscus asellus, Porcellio scaber.
From the class of the Arachnida e.g. Acarus spp., Aceria sheldoni, Aculops spp., Aculus spp., Amblyomma spp., Amphitetranychus viennensis, Argas spp., Boophilus spp., Brevipalpus spp., Bryobia praetiosa, Centruroides spp., Chorioptes spp., Dermanyssus gallinae, Dermatophagoides pteronyssius, Dermatophagoides farinae, Dermacentor spp., Eotetranychus spp., Epitrimerus pyri, Eutetranychus spp., Eriophyes spp., Halotydeus destructor, Hemitarsonemus spp., Hyalomma spp., Ixodes spp., Latrodectus spp., Loxosceles spp., Metatetranychus spp., Nuphersa spp., Oligonychus spp., Ornithodorus spp., Omithonyssus spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vaejovis spp., Vasates lycopersici.
From the order of Symphyla e.g. Scutigerella spp..
From the order of Chilopoda e.g. Geophilus spp., Scutigera spp..
From the order of Collembola e.g. Onychiurus armatus.
From the order of Diplopoda e.g. Blaniulus guttulatus.
From the order of Zygentoma e.g. Lepisma saccharina, Thermobia domestica.
From the order of Orthoptera e.g. Acheta domesticus, Blatta orientalis, Blattella germanica, Dichroplus spp., Gryllotalpa spp., Leucophaea maderae, Locusta spp., Melanoplus spp., Periplaneta spp., Pulex irritans, Schistocerca gregaria, Supella longipalpa.
From the order of Isoptera e.g. Coptotermes spp., Cornitermes cumulans, Cryptotermes spp., Incisitermes spp., Microtermes obesi, Odontotermes spp., Reticulitermes spp.,
From the order of Heteroptera e.g. Anasa tristis, Antestiopsis spp., Boisea spp., Blissus spp., Calocoris spp., Campylomma livida, Cavelerius spp., Cimex lectularius, Collaria spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Monalonion atratum, Nezara spp., Oebalus spp., Pentomidae, Piesma quadrata, Piezodorus spp., Psallus spp., Pseudacysta persea, Rhodnius spp., Sahlbergella singularis, Scaptocoris castanea, Scotinophora spp., Stephanitis nashi, Tibraca spp., Triatoma spp.
From the order of Anoplura (Phthiraptera) e.g. Damalinia spp., Haematopinus spp., Linognathus spp., Pediculus spp., Ptirus pubis, Trichodectes spp..
From the order of Homoptera e.g. Acyrthosipon spp., Acrogonia spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Drosicha spp., Dysaphis spp., Dysmicoccus spp., Empoasca spp., Eriosoma spp., Erythroneura spp., Euscelis bilobatus, Ferrisia spp., Geococcus coffeae, Hieroglyphus spp., Homalodisca coagulata, Hyalopterus arundinis, Icerya spp., Idiocerus spp., Idioscopus spp., Lao-delphax striatellus, Lecanium spp., Lepidosaphes spp., Lipaphis erysimi, Macrosiphum spp., Mahanarva spp., Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes spp., Trioza spp., Typhlocyba spp., Unaspis spp., Viteus vitifolii, Zygina spp..
From the order of Coleoptera e.g. Acalymma vittatum, Acanthoscelides obtectus, Adoretus spp., Agelastica alni, Agriotes spp., Alphitobius diaperinus, Amphimallon solstitialis, Anobium punctatum, Anoplophora spp., Anthonomus spp., Anthrenus spp., Apion spp., Apogonia spp., Atomaria spp., Attagenus spp., Bruchidius obtectus, Bruchus spp., Cassida spp., Cerotoma trifurcata, Ceutorrhynchus spp., Chaetocnema spp., Cleonus mendicus, Conoderus spp., Cosmopolites spp., Costelytra zealandica, Ctenicera spp., Curculio spp., Cryptorhynchus lapathi, Cylindrocopturus spp., Dermestes spp., Diabrotica spp., Dichocrocis spp., Diloboderus spp., Epilachna spp., Epitrix spp., Faustinus spp., Gibbium psylloides, Hellula undalis, Heteronychus arator, Heteronyx spp., Hylamorpha elegans, Hylotrupes bajulus, Hypera postica, Hypothenemus spp., Lachnosterna consanguinea, Lema spp., Leptinotarsa decemlineata, Leucoptera spp., Lissorhoptrus oryzophilus, Lixus spp., Luperodes spp., Lyctus spp., Megascelis spp., Melanotus spp., Meligethes aeneus, Melolontha spp., Migdolus spp., Monochamus spp., Naupactus xanthographus, Niptus hololeucus, Oryctes rhinoceros, Oryzaephilus surinamensis, Oryzaphagus oryzae, Otiorrhynchus spp., Oxycetonia jucunda, Phaedon cochleariae, Phyllophaga spp., Phyllotreta spp., Popillia japonica, Premnotrypes spp., Prostephanus truncatus, Psylliodes spp., Ptinus spp., Rhizobius ventralis, Rhizopertha dominica, Sitophilus spp., Sphenophorus spp., Stegobium paniceum, Sternechus spp., Symphyletes spp., Tanymecus spp., Tenebrio molitor, Tribolium spp., Trogoderma spp., Tychius spp., Xylotrechus spp., Zabrus spp..
From the order of Hymenoptera e.g. Acromyrmex spp., Athalia spp., Atta spp., Diprion spp., Hoplocampa spp., Lasius spp., Monomorium pharaonis, Solenopsis invicta, Tapinoma spp., Vespa spp..
From the order of Lepidoptera e.g. Acronicta major, Adoxophyes spp., Aedia leucomelas, Agrotis spp., Alabama spp., Amyelois transitella, Anarsia spp., Anticarsia spp., Argyroploce spp., Barathra brassicae, Borbo cinnara, Bucculatrix thurberiella, Bupalus piniarius, Busseola spp., Cacoecia spp., Caloptilia theivora, Capua reticulana, Carpocapsa pomonella, Carposina niponensis, Cheimatobia brumata, Chilo spp., Choristoneura spp., Clysia ambiguella, Cnaphalocerus spp., Cnephasia spp., Conopomorpha spp., Conotrachelus spp., Copitarsia spp., Cydia spp., Dalaca noctuides, Diaphania spp., Diatraea saccharalis, Earias spp., Ecdytolopha aurantium, Elasmopalpus lignosellus, Eldana saccharina, Ephestia spp., Epinotia spp., Epiphyas postvittana, Etiella spp., Eulia spp., Eupoecilia ambiguella, Euproctis spp., Euxoa spp., Feltia spp., Galleria mellonella, Gracillaria spp., Grapholitha spp., Hedylepta spp., Helicoverpa spp., Heliothis spp., Hofmannophila pseudospretella, Homoeosoma spp., Homona spp., Hyponomeuta padella, Kakivoria flavofasciata, Laphygma spp., Laspeyresia molesta, Leucinodes orbonalis, Leucoptera spp., Lithocolletis spp., Lithophane antennata, Lobesia spp., Loxagrotis albicosta, Lymantria spp., Lyonetia spp., Malacosoma neustria, Maruca testulalis, Mamestra brassicae, Mocis spp., Mythimna separata, Nymphula spp., Oiketicus spp., Oria spp., Orthaga spp., Ostrinia spp., Oulema oryzae, Panolis flammea, Pamara spp., Pectinophora spp., Perileucoptera spp., Phthorimaea spp., Phyllocnistis citrella, Phyllonorycter spp., Pieris spp., Platynota stultana, Plodia interpunctella, Plusia spp., Plutella xylostella, Prays spp., Prodenia spp., Protoparce spp., Pseudaletia spp., Pseudoplusia includens, Pyrausta nubilalis, Rachiplusia nu, Schoenobius spp., Scirpophaga spp., Scotia segetum, Sesamia spp., Sparganothis spp., Spodoptera spp., Stathmopoda spp., Stomopteryx subsecivella, Synanthedon spp., Tecia solanivora, Thermesia gemmatalis, Tinea pellionella, Tineola bisselliella, Tortrix spp., Trichophaga tapetzella, Trichoplusia spp., Tuta absoluta, Virachola spp..
From the order of Diptera e.g. Aedes spp., Agromyza spp., Anastrepha spp., Anopheles spp., Asphondylia spp., Bactrocera spp., Bibio hortulanus, Calliphora erythrocephala, Ceratitis capitata, Chironomus spp., Chrysomyia spp., Chrysops spp., Cochliomyia spp., Contarinia spp., Cordylobia anthropophaga, Culex spp., Culicoides spp., Culiseta spp., Cuterebra spp., Dacus oleae, Dasyneura spp., Delia spp., Dermatobia hominis, Drosophila spp., Echinocnemus spp., Fannia spp., Gasterophilus spp., Glossina spp., Haematopota spp., Hydrellia spp., Hylemyia spp., Hyppobosca spp., Hypoderma spp., Liriomyza spp.. Lucilia spp., Lutzomia spp., Mansonia spp., Musca spp., Nezara spp., Oestrus spp., Oscinella frit, Pegomyia spp., Phlebotomus spp., Phorbia spp., Phormia spp., Prodiplosis spp., Psila rosae, Rhagoletis spp., Sarcophaga spp., Simulium spp, Stomoxys spp., Tabanus spp., Tannia spp., Tetanops spp., Tipula spp..
From the order of Thysanoptera e.g. Anaphothrips obscurus, Baliothrips biformis, Drepanothris reuteri, Enneothrips flavens, Frankliniella spp., Heliothrips spp., Hercinothrips femoralis, Rhipiphorothrips cruentatus, Scirtothrips spp., Taeniothrips cardamoni, Thrips spp..
From the order of Siphonaptera e.g. Ceratophyllus spp., Ctenocephalides spp., Tunga penetrans, Xenopsylla cheopis.
From the phylums Plathelminthes and Nematoda as animal parasites e.g. from the class of the Helminths e.g. Ancylostoma duodenale, Ancylostoma ceylanicum, Acylostoma braziliensis, Ancylostoma spp., Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.
From the phylum Nematoda as plant pests e e.g.Aphelenchoides spp., Bursaphelenchus spp., Ditylenchus spp., Globodera spp., Heterodera spp., Longidorus spp., Meloidogyne spp., Pratylenchus spp., Radopholus similis, Trichodorus spp., Tylenchulus semipenetrans, Xiphinema spp..
From the subphylum of protozoa e.g. Eimeria.

If appropriate, the compounds according to the invention can, at certain concentrations or application rates, also be used as herbicides, safeners, growth regulators or agents to improve plant properties, or as microbicides, for example as fungicides, antimycotics, bactericides, viricides (including agents against viroids) or as agents against MLO (Mycoplasma-like organisms) and RLO (Rickettsia-like organisms). If appropriate, they can also be employed as intermediates or precursors for the synthesis of other active compounds.

All plants and plant parts can be treated in accordance with the invention. Plants are to be understood as meaning in the present context all plants and plant populations such as desired and undesired wild plants or crop plants (including naturally occurring crop plants). Crop plants can be plants which can be obtained by conventional plant breeding and optimization methods or by biotechnological and genetic engineering methods or by combinations of these methods, including the transgenic plants and including the plant cultivars protectable or not protectable by plant breeders' rights. Plant parts are to be understood as meaning all parts and organs of plants above and below the ground, such as shoot, leaf, flower and root, examples which may be mentioned being leaves, needles, stalks, stems, flowers, fruit bodies, fruits, seeds, roots, tubers and rhizomes. The plant parts also include harvested material, and vegetative and generative propagation material, for example cuttings, tubers, rhizomes, offshoots and seeds.

Treatment according to the invention of the plants and plant parts with the active compounds is carried out directly or by allowing the compounds to act on the surroundings, habitat or storage space by the customary treatment methods, for example by immersion, spraying, evaporation, fogging, scattering, painting on, injection and, in the case of propagation material, in particular in the case of seeds, also by applying one or more coats.

The active compounds can be converted to the customary formulations, such as solutions, emulsions, wettable powders, water- and oil-based suspensions, powders, dusts, pastes, soluble powders, soluble granules, granules for broadcasting, suspension-emulsion concentrates, natural materials impregnated with active compound, synthetic materials impregnated with active compound, fertilizers and microencapsulations in polymeric substances.

These formulations are produced in a known manner, for example by mixing the active compounds with extenders, that is liquid solvents and/or solid carriers, optionally with the use of surfactants, that is emulsifiers and/or dispersants and/or foam-formers. The formulations are prepared either in suitable plants or else before or during the application.

Suitable for use as auxiliaries are substances which are suitable for imparting to the composition itself and/or to preparations derived therefrom (for example spray liquors, seed dressings) particular properties such as certain technical properties and/or also particular biological properties. Typical suitable auxiliaries are: extenders, solvents and carriers.

Suitable extenders are, for example, water, polar and nonpolar organic chemical liquids, for example from the classes of the aromatic and non-aromatic hydrocarbons (such as paraffins, alkylbenzenes, alkylnaphthalenes, chlorobenzenes), the alcohols and polyols (which, if appropriate, may also be substituted, etherified and/or esterified), the ketones (such as acetone, cyclohexanone), esters (including fats and oils) and (poly)ethers, the unsubstituted and substituted amines, amides, lactams (such as N-alkylpyrrolidones) and lactones, the sulphones and sulphoxides (such as dimethyl sulphoxide).

If the extender used is water, it is also possible to employ, for example, organic solvents as auxiliary solvents. Essentially, suitable liquid solvents are: aromatics such as xylene, toluene or alkylnaphthalenes, chlorinated aromatics and chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and also their ethers and esters, ketones such as acetone, methyl ethyl ketone, methyl isobutyl ketone or cyclohexanone, strongly polar solvents such as dimethyl sulphoxide, and also water.

Suitable solid carriers are:
for example, ammonium salts and ground natural minerals such as kaolins, clays, talc, chalk, quartz, attapulgite, montmorillonite or diatomaceous earth, and ground synthetic minerals, such as finely divided silica, alumina and silicates; suitable solid carriers for granules are: for example, crushed and fractionated natural rocks such as calcite, marble, pumice, sepiolite and dolomite, and also synthetic granules of inorganic and organic meals, and granules of organic material such as paper, sawdust, coconut shells, maize cobs and tobacco stalks; suitable emulsifiers and/or foam-formers are: for example, nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates and also protein hydrolysates; suitable dispersants are nonionic and/or ionic substances, for example from the classes of the alcohol-POE- and/or -POP-ethers, acid and/or POP-POE esters, alkyl aryl and/or POP- POE ethers, fat- and/or POP-POE adducts, POE- and/or POP-polyol derivatives, POE- and/or POP-sorbitan- or -sugar adducts, alkyl or aryl sulphates, alkyl- or arylsulphonates and alkyl or aryl phosphates or the corresponding PO-ether adducts. Furthermore, suitable oligo- or polymers, for example those derived from vinylic monomers, from acrylic acid, from EO and/or PO alone or in combination with, for example, (poly)alcohols or (poly)amines. It is also possible to employ lignin and its sulphonic acid derivatives, unmodified and modified celluloses, aromatic and/or aliphatic sulphonic acids and their adducts with formaldehyde.

Tackifiers such as carboxymethylcellulose and natural and synthetic polymers in the form of powders, granules or latices, such as gum arabic, polyvinyl alcohol and polyvinyl acetate, as well as natural phospholipids such as cephalins and lecithins, and synthetic phospholipids, can be used in the formulations.

It is possible to use colorants such as inorganic pigments, for example iron oxide, titanium oxide and Prussian Blue, and organic dyestuffs, such as alizarin dyestuffs, azo dyestuffs and metal phthalocyanine dyestuffs, and trace nutrients such as salts of iron, manganese, boron, copper, cobalt, molybdenum and zinc.

Other possible additives are perfumes, mineral or vegetable, optionally modified oils, waxes and nutrients (including trace nutrients), such as salts of iron, manganese, boron, copper, cobalt, molybdenum and zinc.

Stabilizers, such as low-temperature stabilizers, preservatives, antioxidants, light stabilizers or other agents which improve chemical and/or physical stability may also be present.

The formulations generally comprise between 0.01 and 98% by weight of active compound, preferably between 0.5 and 90%.

The active compound according to the invention can be used in its commercially available formulations and in the use forms, prepared from these formulations, as a mixture with other active compounds, such as insecticides, attractants, sterilizing agents, bactericides, acaricides, nematicides, fungicides, growth-regulating substances, herbicides, safeners, fertilizers or semiochemicals.

A mixture with other known active compounds, such as herbicides, fertilizers, growth regulators, safeners, semiochemicals, or else with agents for improving the plant properties, is also possible.

When used as insecticides, the active compounds according to the invention can furthermore be present in their commercially available formulations and in the use forms, prepared from these formulations, as a mixture with synergistic agents. Synergistic agents are compounds which increase the action of the active compounds, without it being necessary for the synergistic agent added to be active itself.

When used as insecticides, the active compounds according to the invention can furthermore be present in their commercially available formulations and in the use forms, prepared from these formulations, as a mixture with inhibitors which reduce degradation of the active compound after use in the environment of the plant, on the surface of parts of plants or in plant tissues.

The active compound content of the use forms prepared from the commercially available formulations can vary within wide limits. The active compound concentration of the use forms can be from 0.00000001 to 95% by weight of active compound, preferably between 0.00001 and 1% by weight.

The compounds are employed in a customary manner appropriate for the use forms.

The active compounds according to the invention act not only against plant, hygiene and stored product pests, but also in the veterinary medicine sector against animal parasites (ecto- and endoparasites), such as hard ticks, soft ticks, mange mites, leaf mites, flies (biting and licking), parasitic fly larvae, lice, hair lice, feather lice and fleas. These parasites include:
From the order of the Anoplurida, for example, Haematopinus spp., Linognathus spp., Pediculus spp., Phtirus spp., Solenopotes spp.
From the order of the Mallophagida and the suborders Amblycerina and Ischnocerina, for example, Trimenopon spp., Menopon spp., Trinoton spp., Bovicola spp., Werneckiella spp., Lepikentron spp., Damalina spp., Trichodectes spp., Felicola spp.
From the order of the Diptera and the suborders Nematocerina and Brachycerina, for example, Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp.
From the order of the Siphonapterida, for example, Pulex spp., Ctenocephalides spp., Xenopsylla spp., Ceratophyllus spp.
From the order of the Heteropterida, for example, Cimex spp., Triatoma spp., Rhodnius spp., Panstrongylus spp.
From the order of the Blattarida, for example, Blatta orientalis, Periplaneta americana, Blattela germanica, Supella spp.
From the subclass of the Acari (Acarina) and the orders of the Meta- and Mesostigmata, for example, Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp.
From the order of the Actinedida (Prostigmata) and Acaridida (Astigmata), for example, Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp.

The active compounds of the formula (I) according to the invention are also suitable for controlling arthropods which infest agricultural productive livestock, such as, for example, cattle, sheep, goats, horses, pigs, donkeys, camels, buffalo, rabbits, chickens, turkeys, ducks, geese and bees, other pets, such as, for example, dogs, cats, caged birds and aquarium fish, and also so-called test animals, such as, for example, hamsters, guinea pigs, rats and mice. By controlling these arthropods, cases of death and reduction in productivity (for meat, milk, wool, hides, eggs, honey etc.) should be diminished, so that more economic and easier animal husbandry is possible by use of the active compounds according to the invention.

The active compounds according to the invention are used in the veterinary sector and in animal husbandry in a known manner by enteral administration in the form of, for example, tablets, capsules, potions, drenches, granules, pastes, boluses, the feed-through process and suppositories, by parenteral administration, such as, for example, by injection (intramuscular, subcutaneous, intravenous, intraperitoneal and the like), implants, by nasal administration, by dermal use in the form, for example, of dipping or bathing, spraying, pouring on and spotting on, washing and powdering, and also with the aid of moulded articles containing the active compound, such as collars, ear marks, tail marks, limb bands, halters, marking devices and the like.

When used for cattle, poultry, pets and the like, the active compounds of the formula (I) can be used as formulations (for example powders, emulsions, free-flowing compositions), which comprise the active compounds in an amount of 1 to 80% by weight, directly or after 100 to 10 000-fold dilution, or they can be used as a chemical bath.

It has furthermore been found that the compounds according to the invention also have a strong insecticidal action against insects which destroy industrial materials.

The following insects may be mentioned as examples and as preferred - but without any limitation:
Beetles, such as Hylotrupes bajulus, Chlorophorus pilosis, Anobium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;
Hymenopterons, such as Sirex juvencus, Urocerus gigas, Urocerus gigas taignus, Urocerus augur;
Termites, such as Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;
Bristletails, such as Lepisma saccharina.

Industrial materials in the present connection are to be understood as meaning non-living materials, such as, preferably, plastics, adhesives, sizes, papers and cardboards, leather, wood and processed wood products and coating compositions.

The ready-to-use compositions may, if appropriate, comprise further insecticides and, if appropriate, one or more fungicides.

With respect to possible additional additives, reference may be made to the insecticides and fungicides mentioned above.

The compounds according to the invention can likewise be employed for protecting objects which come into contact with saltwater or brackish water, such as hulls, screens, nets, buildings, moorings and signalling systems, against fouling.

Furthermore, the compounds according to the invention, alone or in combinations with other active compounds, may be employed as antifouling agents.

In domestic, hygiene and stored-product protection, the active compounds are also suitable for controlling animal pests, in particular insects, arachnids and mites, which are found in enclosed spaces such as, for example, dwellings, factory halls, offices, vehicle cabins and the like. They can be employed alone or in combination with other active compounds and auxiliaries in domestic insecticide products for controlling these pests. They are active against sensitive and resistant species and against all developmental stages. These pests include:
From the order of the Scorpionidea, for example, Buthus occitanus.
From the order of the Acarina, for example, Argas persicus, Argas reflexus, Bryobia ssp., Dermanyssus gallinae, Glyciphagus domesticus, Ornithodorus moubat, Rhipicephalus sanguineus, Trombicula alfreddugesi, Neutrombicula autumnalis, Dermatophagoides pteronissimus, Dermatophagoides forinae.
From the order of the Araneae, for example, Aviculariidae, Araneidae.
From the order of the Opiliones, for example, Pseudoscorpiones chelifer, Pseudoscorpiones cheiridium, Opiliones phalangium.
From the order of the Isopoda, for example, Oniscus asellus, Porcellio scaber.
From the order of the Diplopoda, for example, Blaniulus guttulatus, Polydesmus spp.
From the order of the Chilopoda, for example, Geophilus spp.
From the order of the Zygentoma, for example, Ctenolepisma spp., Lepisma saccharina, Lepismodes inquilinus.
From the order of the Blattaria, for example, Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.
From the order of the Saltatoria, for example, Acheta domesticus.
From the order of the Dermaptera, for example, Forficula auricularia.
From the order of the Isoptera, for example, Kalotermes spp., Reticulitermes spp.
From the order of the Psocoptera, for example, Lepinatus spp., Liposcelis spp.
From the order of the Coleoptera, for example, Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.
From the order of the Diptera, for example, Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.
From the order of the Lepidoptera, for example, Achroia grisella, Galleria mellonella, Plodia interpunctella, Tinea cloacella, Tinea pellionella, Tineola bisselliella.
From the order of the Siphonaptera, for example, Ctenocephalides canis, Ctenocephalides felis, Pulex irritans, Tunga penetrans, Xenopsylla cheopis.
From the order of the Hymenoptera, for example, Camponotus herculeanus, Lasius fuliginosus, Lasius niger, Lasius umbratus, Monomorium pharaonis, Paravespula spp., Tetramorium caespitum.
From the order of the Anoplura, for example, Pediculus humanus capitis, Pediculus humanus corporis, Pemphigus spp., Phylloera vastatrix, Phthirus pubis.
From the order of the Heteroptera, for example, Cimex hemipterus, Cimex lectularius, Rhodinus prolixus, Triatoma infestans.

In the field of household insecticides, they are used alone or in combination with other suitable active compounds, such as phosphoric esters, carbamates, pyrethroids, neonicotinoids, growth regulators or active compounds from other known classes of insecticides.

They are used in aerosols, pressure-free spray products, for example pump and atomizer sprays, automatic fogging systems, foggers, foams, gels, evaporator products with evaporator tablets made of cellulose or polymer, liquid evaporators, gel and membrane evaporators, propeller-driven evaporators, energy-free, or passive, evaporation systems, moth papers, moth bags and moth gels, as granules or dusts, in baits for spreading or in bait stations.

The compounds according to the invention exhibit a strong microbicidal action and can be used for combating undesirable microorganisms, such as fungi and bacteria, in plant protection and in material protection.

Fungicides can be used in plant protection for combating Plasmodiophoromycetes, Oomycetes, Chytridiomycetes, Zygomycetes, Ascomycetes, Basidiomycetes and Deuteromycetes.

Bactericides can be used in plant protection for combating Pseudomonadaceae, Rhizobiaceae, Enterobacteriaceae, Corynebacteriaceae and Streptomycetaceae.

Mention may be made, by way of example but without limitation, of some pathogens of fungal and bacterial diseases which come under the generic terms listed above:
diseases caused by pathogens of powdery mildew, such as, for example,
Blumeria species, such as, for example, Blumeria graminis;
Podosphaera species, such as, for example, Podosphaera leucotricha;
Sphaerotheca species, such as, for example, Sphaerotheca fuliginea;
Uncinula species, such as, for example, Uncinula necator;
diseases caused by rust pathogens, such as, e.g.,
Gymnosporangium species, such as, for example, Gymnosporangium sabinae;
Hemileia species, such as, for example, Hemileia vastatrix;
Phakopsora species, such as, for example, Phakopsora pachyrhizi and Phakopsora meibomiae;
Puccinia species, such as, for example, Puccinia recondita;
Uromyces species, such as, for example, Uromyces appendiculatus;
diseases caused by pathogens of the Oomycetes group, such as, e.g.,
Bremia species, such as, for example, Bremia lactucae;
Peronospora species, such as, for example, Peronospora pisi or P. brassicae;
Phytophthora species, such as, for example, Phytophthora infestans;
Plasmopara species, such as, for example, Plasmopara viticola;
Pseudoperonospora species, such as, for example, Pseudoperonospora humuli or
Pseudoperonospora cubensis;
Pythium species, such as, for example, Pythium ultimum;
leaf spot diseases and leaf wilts caused by, e.g.,
Alternaria species, such as, for example, Alternaria solani;
Cercospora species, such as, for example, Cercospora beticola;
Cladosporium species, such as, for example, Cladosporium cucumerinum;
Cochliobolus species, such as, for example, Cochliobolus sativus
(conidial form: Drechslera, syn: Helminthosporium);
Colletotrichum species, such as, for example, Colletotrichum lindemuthanium;
Cycloconium species, such as, for example, Cycloconium oleaginum;
Diaporthe species, such as, for example, Diaporthe citri;
Elsinoe species, such as, for example, Elsinoe fawcettii;
Gloeosporium species, such as, for example, Gloeosporium laeticolor;
Glomerella species, such as, for example, Glomerella cingulata;
Guignardia species, such as, for example, Guignardia bidwelli;
Leptosphaeria species, such as, for example, Leptosphaeria maculans;
Magnaporthe species, such as, for example, Magnaporthe grisea;
Mycosphaerella species, such as, for example, Mycosphaerella graminicola and Mycosphaerella fijiensis;
Phaeosphaeria species, such as, for example, Phaeosphaeria nodorum;
Pyrenophora species, such as, for example, Pyrenophora teres;
Ramularia species, such as, for example, Ramularia collo-cygni;
Rhynchosporium species, such as, for example, Rhynchosporium secalis;
Septoria species, such as, for example, Septoria apii;
Typhula species, such as, for example, Typhula incarnata;
Venturia species, such as, for example, Venturia inaequalis;
root and stalk diseases caused by, e.g.,
Corticium species, such as, for example, Corticium graminearum;
Fusarium species, such as, for example, Fusarium oxysporum;
Gaeumannomyces species, such as, for example, Gaeumannomyces graminis;
Rhizoctonia species, such as, for example, Rhizoctonia solani;
Tapesia species, such as, for example, Tapesia acuformis;
Thielaviopsis species, such as, for example, Thielaviopsis basicola;
ear and panicle diseases (including maize cobs) caused by, e.g.,
Alternaria species, such as, for example, Alternaria spp.;
Aspergillus species, such as, for example, Aspergillus flavus;
Cladosporium species, such as, for example, Cladosporium cladosporioides;
Claviceps species, such as, for example, Claviceps purpurea;
Fusarium species, such as, for example, Fusarium culmorum;
Gibberella species, such as, for example, Gibberella zeae;
Monographella species, such as, for example, Monographella nivalis;
diseases caused by smuts, such as, e.g.,
Sphacelotheca species, such as, for example, Sphacelotheca reiliana;
Tilletia species, such as, for example, Tilletia caries;
Urocystis species, such as, for example, Urocystis occulta;
Ustilago species, such as, for example, Ustilago nuda;
fruit rot caused by, e.g.,
Aspergillus species, such as, for example, Aspergillus flavus;
Botrytis species, such as, for example, Botrytis cinerea;
Penicillium species, such as, for example, Penicillium expansum and Penicillium
purpurogenum;
Sclerotinia species, such as, for example, Sclerotinia sclerotiorum;
Verticilium species, such as, for example, Verticilium alboatrum;
seed- and soil-borne rots and wilts, and seedling diseases, caused by, e.g.,
Alternaria species, such as, for example, Alternaria brassicicola;
Aphanomyces species, such as, for example, Aphanomyces euteiches;
Ascochyta species, such as, for example, Ascochyta lentis;
Aspergillus species, such as, for example, Aspergillus flavus;
Cladosporium species, such as, for example, Cladosporium herbarum;
Cochliobolus species, such as, for example, Cochliobolus sativus
(conidial form: Drechslera, Bipolaris syn: Helminthosporium);
Colletotrichum species, such as, for example, Colletotrichum coccodes;
Fusarium species, such as, for example, Fusarium culmorum;
Gibberella species, such as, for example, Gibberella zeae;
Macrophomina species, such as, for example, Macrophomina phaseolina;
Monographella species, such as, for example, Monographella nivalis;
Penicillium species, such as, for example, Penicillium expansum;
Phoma species, such as, for example, Phoma lingam;
Phomopsis species, such as, for example, Phomopsis sojae;
Phytophthora species, such as, for example, Phytophthora cactorum;
Pyrenophora species, such as, for example, Pyrenophora graminea;
Pyricularia species, such as, for example, Pyricularia oryzae;
Pythium species, such as, for example, Pythium ultimum;
Rhizoctonia species, such as, for example, Rhizoctonia solani;
Rhizopus species, such as, for example, Rhizopus oryzae;
Sclerotium species, such as, for example, Sclerotium rolfsii;
Septoria species, such as, for example, Septoria nodorum;
Typhula species, such as, for example, Typhula incarnata;
Verticillium species, such as, for example, Verticillium dahliae;
cankers, galls and witches' broom disease caused by, e.g.,
Nectria species, such as, for example, Nectria galligena;
wilts caused by, e.g.,
Monilinia species, such as, for example, Monilinia laxa;
deformations of leaves, flowers and fruits caused by, e.g.,
Taphrina species, such as, for example, Taphrina deformans;
degenerative diseases of woody plants caused by, e.g.,
Esca species, such as, for example, Phaeomoniella chlamydospora, Phaeoacremonium
aleophilum and Fomitiporia mediterranea;
flower and seed diseases caused by, e.g.,
Botrytis species, such as, for example, Botrytis cinerea;
diseases of plant tubers caused by, e.g.,
Rhizoctonia species, such as, for example, Rhizoctonia solani;
Helminthosporium species, such as, for example, Helminthosporium solani;
diseases caused by bacterial pathogens, such as, e.g.,
Xanthomonas species, such as, for example, Xanthomonas campestris pv. oryzae;
Pseudomonas species, such as, for example, Pseudomonas syringae pv. lachrymans;
Erwinia species, such as, for example, Erwinia amylovora.

Preferably, the following diseases of soybeans can be combated:
fungal diseases on leaves, stalks, pods and seeds caused by, e.g.,
altemaria leaf spot (Alternaria spec. atrans tenuissima), anthracnose (Colletotrichum gloeosporoides dematium var. truncatum), brown spot (Septoria glycines), cercospora leaf spot and blight (Cercospora kikuchii), choanephora leaf blight (Choanephora infundibulifera trispora (Syn.)), dactuliophora leaf spot (Dactuliophora glycines), downy mildew (Peronospora manshurica), drechslera blight (Drechslera glycini), frogeye leaf spot (Cercospora sojina), leptosphaerulina leaf spot (Leptosphaerulina trifolii), phyllostica leaf spot (Phyllosticta sojaecola), pod and stem blight (Phomopsis sojae), powdery mildew (Microsphaera diffusa), pyrenochaeta leaf spot (Pyrenochaeta glycines), rhizoctonia aerial, foliage, and web blight (Rhizoctonia solani), rust (Phakopsora pachyrhizi), scab (Sphaceloma glycines), stemphylium leaf blight (Stemphylium botryosum), target spot (Corynespora cassiicola)
fungal diseases on roots and the stem base caused by, e.g.,
black root rot (Calonectria crotalariae), charcoal rot (Macrophomina phaseolina), fusarium blight or wilt, root rot, and pod and collar rot (Fusarium oxysporum, Fusarium orthoceras, Fusarium semitectum, Fusarium equiseti), mycoleptodiscus root rot (Mycoleptodiscus terrestris), neocosmospora (Neocosmopspora vasinfecta), pod and stem blight (Diaporthe phaseolorum), stem canker (Diaporthe phaseolorum var. caulivora), phytophthora rot (Phytophthora megasperma), brown stem rot (Phialophora gregata), pythium rot (Pythium aphanidermatum, Pythium irregulare, Pythium debaryanum, Pythium myriotylum, Pythium ultimum), rhizoctonia root rot, stem decay, and damping-off (Rhizoctonia solani), sclerotinia stem decay (Sclerotinia sclerotiorum), sclerotinia southern blight (Sclerotinia rolfsii), thielaviopsis root rot (Thielaviopsis basicola).

The active substances according to the invention also exhibit a strong strengthening activity in plants. They are accordingly suitable for mobilizing intrinsic defences of plants against attack by undesirable microorganisms.

In the present context, plant-strengthening (resistance-inducing) substances are to be understood as meaning those materials which are capable of stimulating the defence system of plants such that the treated plants, on subsequent inoculation with undesirable microorganisms, exhibit extensive resistance to these microorganisms.

In the present case, undesirable microorganisms are to be understood as meaning phytopathogenic fungi, bacteria and viruses. The substances according to the invention can thus be used to protect plants from attack by the harmful pathogens mentioned for a certain period of time after the treatment. The period of time for which protection is brought about generally ranges from 1 to 10 days, preferably 1 to 7 days, after the treatment of the plants with the active substances.

The fact that the active substances are well tolerated by plants in the concentrations necessary for combating plant diseases makes possible treatment of aboveground plant parts, of plant propagation material and seed, and of the soil.

In this connection, the active substances according to the invention can be used particularly successfully in combating cereal diseases, such as, e.g., Puccinia species, and diseases in viticulture and in the cultivation of fruit and vegetables, such as, e.g., Botrytis, Venturia or Alternaria species.

The active substances according to the invention are also suitable for increasing the crop yield. In addition, they are of lower toxicity and are well tolerated by plants.

The active substances according to the invention can also optionally be used, in specific concentrations and application amounts, as herbicides, for affecting plant growth and for combating animal pests. They can optionally also be used as intermediates and precursors for the synthesis of additional active substances.

All plants and plant parts can be treated according to the invention. In this connection, plants are to be understood as meaning all plants and plant populations, such as desirable and undesirable wild plants or cultivated plants (including naturally occurring cultivated plants). Cultivated plants can be plants which can be obtained by conventional breeding and optimization methods or by biotechnological and genetic engineering methods or combinations of these methods, including transgenic plants and including plant varieties which may or may not be protected by laws on variety certification. Plant parts should be understood as meaning all aboveground and subsoil parts and organs of plants, such as shoot, leaf, flower and root, examples which are listed being leaves, needles, stalks, stems, flowers, fruiting bodies, fruits and seeds, and also roots, tubers and rhizomes. Plant parts also include harvested crops, and also vegetative and generative propagation material, for example cuttings, tubers, rhizomes, layers and seeds.

The treatment according to the invention of the plants and plant parts with the active substances is carried out directly or by acting on the environment, habitat or storage area thereof using conventional treatment methods, e.g. by dipping, spraying, evaporating, atomizing, scattering, spreading and, with propagation material, in particular with seeds, furthermore by coating with one or more layers.

In addition, it is possible, by the treatment according to the invention, to reduce the mycotoxin content in harvested crops and the foodstuffs and feedstuffs prepared therefrom. In this connection, mention may in particular but not exclusively be made of the following mycotoxins: deoxynivalenol (DON), nivalenol, 15-Ac-DON, 3-Ac-DON, T2 and HT2 toxin, fumonisins, zearalenone, moniliformin, fusarin, diacetoxyscirpenol (DAS), beauvericin, enniatin, fusaroproliferin, fusarenol, ochratoxins, patulin, ergot alkaloids and aflatoxins, which can be caused, for example, by the following fungi: Fusarium spec., such as Fusarium acuminatum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides, and others, and also by Aspergillus spec., Penicillium spec., Claviceps purpurea, Stachybotrys spec., and others.

In material protection, the substances according to the invention can be used for the protection of industrial materials from attack and destruction by undesirable microorganisms.

Industrial materials are to be understood in the present context as meaning nonliving materials which have been prepared for use in industry. For example, industrial materials which are to be protected by active substances according to the invention from microbial change or destruction can be adhesives, sizes, paper and board, textiles, leather, wood, paints and plastic articles, cooling lubricants and other materials which can be attacked or destroyed by microorganisms. In the context of the materials to be protected, mention may also be made of parts of production plants, for example cooling water circuits, which can be detrimentally affected by proliferation of microorganisms. In the context of the present invention, mention may preferably be made, as industrial materials, of adhesives, sizes, papers and boards, leather, wood, paints, cooling lubricants and heat-transfer liquids, particularly preferably of wood.

Examples which may be mentioned of microorganisms which can decompose or modify industrial materials are bacteria, fungi, yeasts, algae and slime organisms. The active substances according to the invention are preferably active against fungi, in particular moulds, wood-discolouring and wood-destroying fungi (Basidiomycetes), and against slime organisms and algae.

Mention may be made, by way of example, of microorganisms of the following genera:
Alternaria, such as Alternaria tenuis,
Aspergillus, such as Aspergillus niger,
Chaetomium, such as Chaetomium globosum,
Coniophora, such as Coniophora puetana,
Lentinus, such as Lentinus tigrinus,
Penicillium, such as Penicillium glaucum,
Polyporus, such as Polyporus versicolor,
Aureobasidium, such as Aureobasidium pullulans,
Sclerophoma, such as Sclerophoma pityophila,
Trichoderma, such as Trichoderma viride,
Escherichia, such as Escherichia coli,
Pseudomonas, such as Pseudomonas aeruginosa,
Staphylococcus, such as Staphylococcus aureus.

The present invention relates to a composition for combating undesirable microorganisms, comprising at least one of the compounds according to the invention.

The compounds according to the invention can for this, depending on their respective physical and/or chemical properties, be converted into the standard formulations, such as solutions, emulsions, suspensions, powders, foams, pastes, granules, aerosols, very fine encapsulations in polymeric substances and in coating materials for seed, and also ULV cold- and hot-fogging formulations.

These formulations are prepared in a known way, e.g. by mixing the active substances with extenders, that is liquid solvents, liquefied gases under pressure and/or solid carriers, optionally with the use of surface-active agents, that is emulsifiers and/or dispersants and/or foaming agents. In the case of the use of water as extender, use may also be made, e.g., of organic solvents as cosolvents. Possible liquid solvents are essentially: aromatic hydrocarbons, such as xylene, toluene or alkylnaphthalenes, chlorinated aromatic hydrocarbons or chlorinated aliphatic hydrocarbons, such as chlorobenzenes, chloroethylenes or methylene chloride, aliphatic hydrocarbons, such as cyclohexane or paraffins, e.g. petroleum fractions, alcohols, such as butanol or glycol, and the ethers and esters thereof, ketones, such as acetone, methyl ethyl ketone, methyl isobutyl ketone or cyclohexanone, strongly polar solvents, such as dimethylformamide and dimethyl sulphoxide, and also water. Liquefied gaseous extenders or carriers are to be understood as meaning those liquids which are in the gas form at standard temperature and at standard pressure, e.g. aerosol propellants, such as halogenated hydrocarbons and also butane, propane, nitrogen and carbon dioxide. Possible solid carriers are, e.g., ground natural minerals, such as kaolins, argillaceous earths, talc, chalk, quartz, attapulgite, montmorillonite or diatomaceous earth, and ground synthetic minerals, such as highly dispersed silica, aluminium oxide and silicates. Possible solid carriers for granules are, e.g., broken and fractionated natural rocks, such as calcite, pumice, marble, sepiolite or dolomite, and also synthetic granules formed from inorganic and organic dusts, and also granules formed from organic material, such as sawdust, coconut shells, maize cobs and tobacco stalks. Possible emulsifiers and/or foaming agents are, e.g., nonionic and anionic emulsifiers, such as polyoxyethylene fatty acid esters, polyoxyethylene fatty alcohol ethers, e.g. alkylaryl polyglycol ethers, alkylsulphonates, alkyl sulphates, arylsulphonates, and also protein hydrolysates. Possible dispersants are, e.g., lignosulphite waste liquors and methylcellulose.

Use may be made, in the formulations, of stickers, such as carboxymethylcellulose, natural and synthetic polymers in the powder, granule or latex form, such as gum arabic, polyvinyl alcohol, polyvinyl acetate, and also natural phospholipids, such as cephalins and lecithins, and synthetic phospholipids. Other possible additives are mineral and vegetable oils.

Use may also be made of colorants, such as inorganic pigments, e.g. iron oxide, titanium oxide, Prussian blue, and organic colorants, such as alizarin dyes, azo dyes and metal phthalocyanine dyes, and trace elements, such as salts of iron, manganese, boron, copper, cobalt, molybdenum and zinc.

The formulations generally comprise between 0.1 and 95% by weight of active substance, preferably between 0.5 and 90%.

The formulations described above can be used in a method according to the invention for combating undesirable microorganisms, in which the compounds according to the invention are applied to the microorganisms and/or to the habitat thereof.

The combating of phytopathogenic fungi by the treatment of the seed of plants has been known for a long time and is the subject-matter of continuous improvements. Nevertheless, a series of problems arises in the treatment of seed, which problems may not always be satisfactorily solved. Thus, it is desirable to develop methods for protecting the seed and the germinating plant which render superfluous or at least markedly reduce the additional application of plant protection compositions after sowing or after emergence of the plants. It is furthermore desirable to optimize the amount of the active substance used, so that the seed and the germinating plant are given the best possible protection against attack by phytopathogenic fungi but without the plant itself being damaged by the active substance used. In particular, methods for the treatment of seed should also include the intrinsic fungicidal properties of transgenic plants in order to achieve optimum protection of the seed and the germinating plant with a minimum expenditure of plant protection compositions.

The present invention therefore also relates in particular to a method for the protection of seed and germinating plants from attack by phytopathogenic fungi, by treating the seed with a composition according to the invention.

The invention likewise relates to the use of the compositions according to the invention for the treatment of seed to protect the seed and the germinating plant from phytopathogenic fungi.

Furthermore, the invention relates to seed which has been treated with a composition according to the invention in order to protect from phytopathogenic fungi.

One of the advantages of the present invention is that, because of the particular systemic properties of the compositions according to the invention, the treatment of the seed with these compositions not only protects the seed itself from phytopathogenic fungi but also protects the plants resulting therefrom after emergence from phytopathogenic fungi. In this way, the immediate treatment of the crop at the time of sowing or shortly thereafter can be dispensed with.

It is likewise to be regarded as advantageous that the mixtures according to the invention can in particular also be used with transgenic seed.

The compositions according to the invention are suitable for the protection of seed of any plant variety used in agriculture, in the greenhouse, in forests or in horticulture. The seed concerned in this connection is in particular seed of cereals (such as wheat, barley, rye, millet and oats), maize, cotton, soya, rice, potatoes, sunflowers, beans, coffee, beet (e.g., sugarbeet and forage beet), peanuts, vegetables (such as tomatoes, cucumbers, onions and lettuce), lawns and ornamental plants. The treatment of the seed of cereals (such as wheat, barley, rye and oats), maize and rice is of particular importance.

In the context of the present invention, the composition according to the invention is applied to the seed alone or in a suitable formulation. Preferably, the seed is treated in a condition sufficiently stable for no damage to occur during the treatment. In general, the treatment of the seed can be carried out at any point in time between harvesting and sowing. Use is usually made of seed which has been separated from the plant and freed from pods, shells, stalks, skins, hairs or fruit flesh. Thus, it is possible, for example, to use seed which has been harvested, cleaned and dried up to a moisture content of less than 15% by weight. Alternatively, it is also possible to use seed which, after drying, has been treated, e.g. with water, and then dried again.

In general, care must be taken, in the treatment of the seed, that the amount of the composition according to the invention and/or of additional additives applied to the seed is chosen so that the germination of the seed is not impaired or that the plant resulting therefrom is not damaged. This is to be taken into consideration in particular with active substances which may show phytotoxic effects at certain application rates.

The compositions according to the invention can be applied immediately, thus without comprising additional components and without having been diluted. It is generally preferable to apply the compositions to the seed in the form of a suitable formulation. Suitable formulations and methods for seed treatment are known to a person skilled in the art and are described, e.g., in the following documents: US 4 272 417 A, US 4 245 432 A, US 4 808 430 A, US 5 876 739 A, US 2003/0176428 A1, WO 2002/080675 A1, WO 2002/028186 A2.

The active substance combinations which can be used according to the invention can be converted into the usual seed dressing formulations, such as solutions, emulsions, suspensions, powders, foams, slurries or other coating materials for seed, and also ULV formulations.

These formulations are prepared in a known way by mixing the active substances or active substance combinations with conventional additives, such as, for example, conventional extenders and also solvents or diluents, colorants, wetting agents, dispersants, emulsifiers, antifoaming agents, preservatives, secondary thickeners, adhesives, gibberellins and also water.

Suitable colorants which may be present in the seed dressing formulations which can be used according to the invention comprise all colorants conventional for such purposes. In this connection, use may be made both of pigments, which are sparingly soluble in water, and dyes, which are soluble in water. Mention may be made, as examples, of the colorants known under the descriptions Rhodamine B, C.I. Pigment Red 112 and C.I. Solvent Red 1.

Possible wetting agents which can be present in the seed dressing formulations which can be used according to the invention comprise all substances which promote wetting and are conventional in the formulation of agrochemical active substances. Use may preferably be made of alkylnaphthalenesulphonates, such as diisopropyl- or diisobutylnaphthalenesulphonates.

Suitable dispersants and/or emulsifiers which may be present in the seed dressing formulations which can be used according to the invention comprise all nonionic, anionic and cationic dispersants conventional in the formulation of agrochemical active substances. Use may preferably be made of nonionic or anionic dispersants or mixtures of nonionic or anionic dispersants. Mention may in particular be made, as suitable nonionic dispersants, of ethylene oxide/propylene oxide block polymers, alkylphenol polyglycol ethers and also tristyrylphenol polyglycol ethers, and the phosphated or sulphated derivatives thereof. Suitable anionic dispersants are in particular lignosulphonates, polyacrylic acid salts and arylsulphonate/formaldehyde condensates.

Antifoaming agents which may be present in the seed dressing formulations which can be used according to the invention comprise all foam-inhibiting substances conventional in the formulation of agrochemical active substances. Use may preferably be made of silicone defoaming agents and magnesium stearate.

Preservatives which may be present in the seed dressing formulations which can be used according to the invention comprise all substances which can be used in agrochemical compositions for such purposes. Mention may be made, by way of example, of dichlorophen and benzyl alcohol hemiformal.

Possible secondary thickeners which may be present in the seed dressing formulations which can be used according to the invention comprise all substances which can be used in agrochemical compositions for such purposes. Preferably suitable are cellulose derivatives, acrylic acid derivatives, xanthan, modified clays and highly dispersed silica.

Possible adhesives which may be present in the seed dressing formulations which can be used according to the invention comprise all conventional binders which can be used in seed dressings. Mention may preferably be made of polyvinylpyrrolidone, polyvinyl acetate, polyvinyl alcohol and tylose.

Possible gibberellins which may be present in the seed dressing formulations which can be used according to the invention preferably comprise gibberellins A1, A3 (= gibberellic acid), A4 and A7; use is particularly preferably made of gibberellic acid. Gibberellins are known (cf. R. Wegler, "Chemie der Pflanzenschutz- und Schädlingsbekämpfungsmittel" [Chemistry of Plant Protection and Pest Control Agents], Vol. 2, Springer Verlag, 1970, pp. 401-412).

The seed dressing formulations which can be used according to the invention can be used, either directly or after prior diluting with water, for the treatment of seed of the most varied species. Thus, the concentrates or the compositions which can be obtained therefrom by diluting with water can be used for the dressing of the seed of cereals, such as wheat, barley, rye, oats and triticale, and also the seed of maize, rice, rape, peas, beans, cotton, sunflowers and beet, or also of vegetable seed of the most varied natures. The seed dressing formulations which can be used according to the invention or the diluted compositions thereof can also be used for the dressing of seed of transgenic plants. In this connection, additional synergistic effects may also occur in interaction with the substances formed by expression.

All mixing devices which can be conventionally used for dressing are suitable for the treatment of seed with the seed dressing formulations which can be used according to the invention or the compositions prepared therefrom by addition of water. Specifically, the dressing procedure is such that the seed is introduced into a mixer, the amount of seed dressing formulation desired each time is added, either as such or after prior dilution with water, and mixing is carried out until the formulation is uniformly distributed over the seed. If appropriate, a drying operation follows.

The application rate of the seed dressing formulations which can be used according to the invention can be varied within a relatively wide range. It depends on the respective content of the active substances in the formulations and on the seed. The application rates of active substance combination are generally between 0.001 and 50 g per kilogram of seed, preferably between 0.01 and 15 g per kilogram of seed.

The compounds according to the invention can be used, as such or in their formulations, also in a mixture with known fungicides, bactericides, acaricides, nematicides or insecticides, in order thus, e.g., to broaden the spectrum of activity or to prevent the development of resistance.

A mixture with other known active substances, such as herbicides, or with fertilizers and growth regulators, safeners or semiochemicals is also possible.

In addition, the compounds of the formula (I) according to the invention also exhibit very good antimycotic activities. They have a very broad spectrum of antimycotic activity, in particular against dermatophytes and budding fungi, moulds and diphasic fungi (e.g. against Candida species, such as Candida albicans, Candida glabrata), and also Epidermophyton floccosum, Aspergillus species, such as Aspergillus niger and Aspergillus fumigatus, Trichophyton species, such as Trichophyton mentagrophytes, Microsporon species, such as Microsporon canis and audouinii. The enumeration of these fungi does not represent in any way a limitation on the mycotic spectrum which can be included but has only an illustrative nature.

The compounds according to the invention can accordingly be used both in medicinal and in nonmedicinal applications.

The active substances can be applied as such, in the form of their formulations or in the form of the application forms prepared therefrom, such as ready-to-use solutions, suspensions, wettable powders, pastes, soluble powders, dusts and granules. Application takes place in standard fashion, e.g. by pouring, spraying, atomizing, scattering, dusting, foaming, spreading, and the like. It is furthermore possible to apply the active substances by the ultra-low-volume method or to inject the active substance composition or the active substance itself into the soil.

The seed of the plant can also be treated.

When the compound according to the invention are used as fungicides, the application rates can be varied within a relatively wide range depending on the type of application. In the treatment of plant parts, the application rates of active substance are generally between 0.1 and 10 000 g/ha, preferably between 10 and 1000 g/ha. In seed treatment, the application rates of active substance are generally between 0.001 and 50 g per kilogram of seed, preferably between 0.01 and 10 g per kilogram of seed. In soil treatment, the application rates of active substance are generally between 0.1 and 10 000 g/ha, preferably between 1 and 5000 g/ha.

As already mentioned above, all plants and the parts thereof can be treated according to the invention. In a preferred embodiment, plant species and plant varieties occurring in the wild or obtained by conventional biological breeding methods, such as crossing or protoplast fusion, and the parts thereof are treated. In an additional preferred embodiment, transgenic plants and plant varieties obtained by genetic engineering methods, optionally in combination with conventional methods, (genetically modified organisms) and the parts thereof are treated. The term "parts" or "parts of plants" or "plant parts" was explained above.

The method of treatment according to the invention can be used in the treatment of genetically modified organisms (GMOs), e.g. plants or seeds. Genetically modified plants (or transgenic plants) are plants of which a heterologous gene has been stably integrated into the genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using, for example, antisense technology, cosuppression technology or RNA interference - RNAi technology). A heterologous gene that is located in the genome is also called a transgene. A transgene that is defined by its particular location in the plant genome is called a transformation or transgenic event.

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the active substances and compositions which can be used according to the invention, better plant growth, increased tolerance to high or low temperatures, increased tolerance to drought or to water or soil salt content, increased flowering performance, easier harvesting, accelerated maturation, higher harvest yields, bigger fruits, larger plant height, greener leaf colour, earlier flowering, higher quality and/or a higher nutritional value of the harvested products, higher sugar concentration within the fruits, better storage stability and/or processability of the harvested products are possible, which exceed the effects which were actually to be expected.

At certain application rates, the active substance combinations according to the invention may also have a strengthening effect in plants. Accordingly, they are suitable for mobilizing the defence system of the plant against attack by unwanted phytopathogenic fungi and/or microorganisms and/or viruses. This may, if appropriate, be one of the reasons for the enhanced activity of the combinations according to the invention, for example against fungi. Plant-strengthening (resistance-inducing) substances are to be understood as meaning, in the present context, those substances or combinations of substances which are capable of stimulating the defence system of plants in such a way that, when subsequently inoculated with unwanted phytopathogenic fungi and/or microorganisms and/or viruses, the treated plants display a substantial degree of resistance to these unwanted phytopathogenic fungi and/or microorganisms and/or viruses. In the present case, unwanted phytopathogenic fungi and/or microorganisms and/or viruses are to be understood as meaning phytopathogenic fungi, bacteria and viruses. Thus, the substances according to the invention can be employed for protecting plants against attack by the abovementioned pathogens within a certain period of time after the treatment. The period of time within which protection is effected generally extends from 1 to 10 days, preferably 1 to 7 days, after the treatment of the plants with the active substances.

Plants and plant cultivars which are preferably treated according to the invention include all plants which have genetic material which imparts particularly advantageous, useful traits to these plants (whether obtained by breeding and/or biotechnological means).

Plants and plant cultivars which are also preferably treated according to the invention are resistant against one or more biotic stresses, i.e. the said plants show a better defence against animal and microbial pests, such as against nematodes, insects, mites, phytopathogenic fungi, bacteria, viruses and/or viroids.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may also be treated according to the invention are those plants characterized by enhanced yield characteristics. Increased yield in the said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including early flowering, flowering control for hybrid seed production, seedling vigour, plant size, internode number and distance, root growth, seed size, fruit size, pod size, pod or ear number, seed number per pod or ear, seed mass, enhanced seed filling, reduced seed dispersal, reduced pot dehiscence and lodging resistance. Further yield traits include seed composition, such as carbohydrate content, protein content, oil content and composition, nutritional value, reduction in anti-nutritional compounds, improved processability and better storage stability.

Plants that may be treated according to the invention are hybrid plants that already express the characteristics of heterosis or hybrid vigour which results in generally higher yield, vigour, health and resistance towards biotic and abiotic stress factors. Such plants are typically made by crossing an inbred male-sterile parent line (the female parent) with another inbred male-fertile parent line (the male parent). Hybrid seed is typically harvested from the male sterile plants and sold to growers. Male sterile plants can sometimes (e.g. in maize) be produced by detasseling (i.e. the mechanical removal of the male reproductive organs or male flowers) but, more typically, male sterility is the result of genetic determinants in the plant genome. In that case, and especially when seed is the desired product to be harvested from the hybrid plants, it is typically useful to ensure that male fertility in hybrid plants that contain the genetic determinants responsible for male sterility is fully restored. This can be accomplished by ensuring that the male parents have appropriate fertility restorer genes which are capable of restoring the male fertility in hybrid plants that contain the genetic determinants responsible for male sterility. Genetic determinants for male sterility may be located in the cytoplasm. Examples of cytoplasmic male sterility (CMS) were for instance described in Brassica species (WO 1992/005251, WO 1995/009910, WO 1998/27806, WO 2005/002324, WO 2006/021972 and US 6 229 072). However, genetic determinants for male sterility can also be located in the nuclear genome. Male sterile plants can also be obtained by plant biotechnology methods, such as genetic engineering. A particularly useful means of obtaining male-sterile plants is described in WO 89/10396 in which, for example, a ribonuclease, such as barnase, is selectively expressed in the tapetum cells in the stamens. Fertility can then be restored by expression in the tapetum cells of a ribonuclease inhibitor, such as barstar (e.g. WO 1991/002069).

Plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Herbicide-tolerant plants are for example glyphosate-tolerant plants, i.e. plants made tolerant to the herbicide glyphosate or salts thereof. For example, glyphosate-tolerant plants can be obtained by transforming the plant with a gene encoding the enzyme 5-enolpyruvylshikimate-3-phosphate synthase (EPSPS). Examples of such EPSPS genes are the AroA gene (mutant CT7) of the bacterium Salmonella typhimurium (Comai et al., Science (1983), 221, 370-371), the CP4 gene of the bacterium Agrobacterium sp. (Barry et al., Curr. Topics Plant Physiol. (1992), 7, 139-145), the genes encoding a petunia EPSPS (Shah et al., Science (1986), 233, 478-481), a tomato EPSPS (Gasser et al., J. Biol. Chem. (1988), 263, 4280-4289) or an eleusine EPSPS (WO 2001/66704). It can also be a mutated EPSPS as described in for example EP-A 0837944, WO 2000/066746, WO 2000/066747 or WO 2002/026995. Glyphosate-tolerant plants can also be obtained by expressing a gene that encodes a glyphosate oxidoreductase enzyme as described in US 5 776 760 and US 5 463 175. Glyphosate-tolerant plants can also be obtained by expressing a gene that encodes a glyphosate acetyl transferase enzyme as described in for example WO 2002/036782, WO 2003/092360, WO 2005/012515 and WO 2007/024782. Glyphosate-tolerant plants can also be obtained by selecting plants containing naturally-occurring mutations of the abovementioned genes, as described in for example WO 2001/024615 or WO 2003/013226.

Other herbicide-resistant plants are for example plants that are made tolerant to herbicides inhibiting the enzyme glutamine synthase, such as bialaphos, phosphinotricin or glufosinate. Such plants can be obtained by expressing an enzyme detoxifying the herbicide or a mutant of the glutamine synthase enzyme that is resistant to inhibition. One such efficient detoxifying enzyme is an enzyme encoding a phosphinotricin acetyltransferase (such as the bar or pat protein from Streptomyces species). Plants expressing an exogenous phosphinotricin acetyltransferase are for example described in US 5 561 236; US 5 648 477; US 5 646 024; US 5 273 894; US 5 637 489; US 5 276 268; US 5 739 082; US 5 908 810 and US 7 112 665.

Further herbicide-tolerant plants are also plants that are made tolerant to the herbicides inhibiting the enzyme hydroxyphenylpyruvatedioxygenase (HPPD). Hydroxyphenylpyruvatedioxygenases are enzymes that catalyse the reaction in which para-hydroxyphenylpyruvate (HPP) is transformed into homogentisate. Plants tolerant to HPPD inhibitors can be transformed with a gene encoding a naturally occurring resistant HPPD enzyme, or a gene encoding a mutated HPPD enzyme as described in WO 1996/038567, WO 1999/024585 and WO 1999/024586. Tolerance to HPPD inhibitors can also be obtained by transforming plants with genes encoding certain enzymes enabling the formation of homogentisate despite the inhibition of the native HPPD enzyme by the HPPD inhibitor. Such plants and genes are described in WO 1999/034008 and WO 2002/36787. Tolerance of plants to HPPD inhibitors can also be improved by transforming plants with a gene encoding an enzyme prephenate dehydrogenase in addition to a gene encoding an HPPD-tolerant enzyme, as described in WO 2004/024928.

Further herbicide-resistant plants are plants that are made tolerant to acetolactate synthase (ALS) inhibitors. Known ALS inhibitors include, for example, sulphonylurea, imidazolinone, triazolopyrimidines, pyrimidinyloxy(thio)benzoates and/or sulphonylaminocarbonyltriazolinone herbicides. Different mutations in the ALS enzyme (also known as acetohydroxyacid synthase, AHAS) are known to confer tolerance to different herbicides and groups of herbicides, as described for example in Tranel and Wright, Weed Science (2002), 50, 700-712, but also in US 5 605 011, US 5 378 824, US 5 141 870 and US 5 013 659. The production of sulphonylurea-tolerant plants and imidazolinone-tolerant plants is described in US 5 605 011; US 5 013 659; US 5 141 870; US 5 767 361; US 5 731 180; US 5 304 732; US 4 761 373; US 5 331 107; US 5 928 937; and US 5 378 824; and international publication WO 1996/033270. Other imidazolinone-tolerant plants are also described in, for example, WO 2004/040012, WO 2004/106529, WO 2005/020673, WO 2005/093093, WO 2006/007373, WO 2006/015376, WO 2006/024351 and WO 2006/060634. Further sulphonylurea- and imidazolinone-tolerant plants are also described in, for example, WO 2007/024782.

Other plants tolerant to imidazolinone and/or sulphonylurea can be obtained by induced mutagenesis, selection in cell cultures in the presence of herbicide or mutation breeding as described for example for soybeans in US 5 084 082, for rice in WO 1997/41218, for sugarbeet in US 5 773 702 and WO 1999/057965, for lettuce in US 5 198 599, or for sunflower in WO 2001/065922.

Plants or plant cultivars (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

An "insect-resistant transgenic plant", as used herein, includes any plant containing at least one transgene comprising a coding sequence encoding:
1) an insecticidal crystal protein from Bacillus thuringiensis or an insecticidal portion thereof, such as the insecticidal crystal proteins listed by Crickmore et al., Microbiology and Molecular Biology Reviews (1998), 62, 807-813, updated by Crickmore et al. (2005) at the Bacillus thuringiensis toxin nomenclature, online at: http://www.lifesci.sussex.ac.uk/Home/Neil_Crickmore/Bt/), or insecticidal portions thereof, e.g. proteins of the Cry protein classes Cry1Ab, CrylAc, Cry1F, Cry2Ab, Cry3Ae or Cry3Bb or insecticidal portions thereof; or
2) a crystal protein from Bacillus thuringiensis or a portion thereof which is insecticidal in the presence of a second other crystal protein from Bacillus thuringiensis or a portion thereof, such as the binary toxin made up of the Cy34 and Cy35 crystal proteins (Moellenbeck et al., Nat. Biotechnol. (2001), 19, 668-72; Schnepf et al., Applied Environm. Microb. (2006), 71, 1765-1774); or
3) a hybrid insecticidal protein comprising parts of two different insecticidal crystal proteins from Bacillus thuringiensis, such as a hybrid of the proteins of 1) above or a hybrid of the proteins of 2) above, e.g. the Cry1A.105 protein produced by maize event MON98034 (WO 2007/027777); or
4) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation, such as the Cry3Bb1 protein in maize events MON863 or MON88017, or the Cry3A protein in maize event MIR 604;
5) an insecticidal secreted protein from Bacillus thuringiensis or Bacillus cereus, or an insecticidal portion thereof, such as the vegetative insecticidal (VIP) proteins listed at http://www.lifesci.sussex.ac.uk/Home/Neil_Crickmore/Bt/vip.html, e.g., proteins from VIP3Aa protein class; or
6) a secreted protein from Bacillus thuringiensis or Bacillus cereus which is insecticidal in the presence of a second secreted protein from Bacillus thuringiensis or B. cereus, such as the binary toxin made up of the VIP1A and VIP2A proteins (WO 1994/21795);
7) a hybrid insecticidal protein comprising parts from different secreted proteins from Bacillus thuringiensis or Bacillus cereus, such as a hybrid of the proteins in 1) above or a hybrid of the proteins in 2) above; or
8) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation (while still encoding an insecticidal protein), such as the VIP3Aa protein in cotton event COT 102.

Of course, an insect-resistant transgenic plant, as used herein, also includes any plant comprising a combination of genes encoding the proteins of any one of the above classes 1 to 8. In one embodiment, an insect-resistant plant contains more than one transgene encoding a protein of any one of the above classes 1 to 8, to expand the range of target insect species affected or to delay insect resistance development to the plants by using different proteins insecticidal to the same target insect species but having a different mode of action, such as binding to different receptor binding sites in the insect.

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance. Particularly useful stress tolerance plants include:
a. plants which contain a transgene capable of reducing the expression and/or the activity of the poly(ADP-ribose)polymerase (PARP) gene in the plant cells or plants as described in WO 2000/004173 or EP 04077984.5 or EP 06009836.5;
b. plants which contain a stress tolerance enhancing transgene capable of reducing the expression and/or activity of the PARG encoding genes of the plants or plant cells, as described e.g. in WO 2004/090140;
c. plants which contain a stress tolerance enhancing transgene coding for a plant-functional enzyme of the nicotinamide adenine dinucleotide salvage biosynthesis pathway, including nicotinamidase, nicotinate phosphoribosyltransferase, nicotinic acid mononucleotide adenyltransferase, nicotinamide adenine dinucleotide synthetase or nicotinamide phosphoribosyltransferase, as described, e.g., in EP 04077624.7 or WO 2006/133827 or PCT/EP07/002433.

Plants or plant cultivars (obtained by plant biotechnology methods such as genetic engineering) which may also be treated according to the invention show altered quantity, quality and/or storage stability of the harvested product and/or altered properties of specific ingredients of the harvested product such as:
1) transgenic plants which synthesize a modified starch, which in its physical-chemical characteristics, in particular the amylose content or the amylose/amylopectin ratio, the degree of branching, the average chain length, the side chain distribution, the viscosity behaviour, the gelling strength, the starch grain size and/or the starch grain morphology, is changed in comparison with the synthesized starch in wild type plant cells or plants, so that this modified starch is better suited for special applications. The said transgenic plants synthesizing a modified starch are disclosed, for example, in EP 0 571 427, WO 1995/004826, EP 0 719 338, WO 1996/15248, WO 1996/19581, WO 1996/27674, WO 1997/11188, WO 1997/26362, WO 1997/32985, WO 1997/42328, WO 1997/44472, WO 1997/45545, WO 1998/27212, WO 1998/40503, WO 99/58688, WO 1999/58690, WO 1999/58654, WO 2000/008184, WO 2000/008185, WO 2000/28052, WO 2000/77229, WO 2001/12782, WO 2001/12826, WO 2002/101059, WO 2003/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 2000/22140, WO 2006/063862, WO 2006/072603, WO 2002/034923, EP 06090134.5, EP 06090228.5, EP 06090227.7, EP 07090007.1, EP 07090009.7, WO 2001/14569, WO 2002/79410, WO 2003/33540, WO 2004/078983, WO 2001/19975, WO 1995/26407, WO 1996/34968, WO 1998/20145, WO 1999/12950, WO 1999/66050, WO 1999/53072, US 6 734 341, WO 2000/11192, WO 1998/22604, WO 1998/32326, WO 2001/98509, WO 2001/98509, WO 2005/002359, US 5 824 790, US 6 013 861, WO 1994/004693, WO 1994/009144, WO 1994/11520, WO 1995/35026 or WO 1997/20936.
2) transgenic plants which synthesize nonstarch carbohydrate polymers or which synthesize nonstarch carbohydrate polymers with altered properties in comparison to wild type plants without genetic modification. Examples are plants producing polyfructose, especially of the inulin and levan type, as disclosed in EP 0 663 956, WO 1996/001904, WO 1996/021023, WO 1998/039460 and WO 1999/024593, plants producing alpha-1,4-glucans as disclosed in WO 1995/031553, US 2002/031826, US 6 284 479, US 5 712 107, WO 1997/047806, WO 1997/047807, WO 1997/047808 and WO 2000/14249, plants producing alpha-1,6 branched alpha-1,4-glucans, as disclosed in WO 2000/73422, and plants producing alternan, as disclosed in WO 2000/047727, EP 06077301.7, US 5 908 975 and EP 0 728 213.
3) transgenic plants which produce hyaluronan, as for example disclosed in WO 2006/032538, WO 2007/039314, WO 2007/039315, WO 2007/039316, JP 2006/304779 and WO 2005/012529.

Plants or plant cultivars (obtained by plant biotechnology methods, such as genetic engineering) which may also be treated according to the invention are plants, such as cotton plants, with altered fibre characteristics. Such plants can be obtained by genetic transformation, or by selection of plants containing a mutation imparting such altered fibre characteristics and include:
a) plants, such as cotton plants, containing an altered form of cellulose synthase genes as described in WO 1998/040549,
b) plants, such as cotton plants, containing an altered form of rsw2 or rsw3 homologous nucleic acids as described in WO 2004/053219;
c) plants, such as cotton plants, with increased expression of sucrose phosphate synthase as described in WO 2001/017333;
d) plants, such as cotton plants, with increased expression of sucrose synthase as described in WO 02/45485;
e) plants, such as cotton plants, wherein the timing of the plasmodesmatal gating at the basis of the fibre cell is altered, e.g. through downregulation of fibre selective β-1,3-glucanase as described in WO 2005/017157;
f) plants, such as cotton plants, having fibres with altered reactivity, e.g. through the expression of N-acetylglucosamine transferase gene including nodC and chitin synthase genes as described in WO 2006/136351.

Plants or plant cultivars (obtained by plant biotechnology methods, such as genetic engineering) which may also be treated according to the invention are plants, such as oilseed rape or related Brassica plants, with altered oil profile characteristics. Such plants can be obtained by genetic transformation or by selection of plants containing a mutation imparting such altered oil characteristics and include:
a) plants, such as oilseed rape plants, producing oil having a high oleic acid content as described, e.g., in US 5 969 169, US 5 840 946, US 6 323 392 or US 6 063 947;
b) plants such as oilseed rape plants, producing oil having a low linolenic acid content as described in US 6 270 828, US 6 169 190 or US 5 965 755;
c) plants such as oilseed rape plants, producing oil having a low level of saturated fatty acids as described, e.g., in US 5 434 283.

Particularly useful transgenic plants which may be treated according to the invention are plants which comprise one or more genes which encode one or more toxins are the transgenic plants which are sold under the following trade names: YIELD GARD® (for example maize, cotton, soybeans), KnockOut® (for example maize), BiteGard® (for example maize), BT-Xtra® (for example maize), StarLink® (for example maize), Bollgard® (cotton), Nucotn® (cotton), Nucotn 33B® (cotton), NatureGard® (for example maize), Protecta® and NewLeaf® (potato). Examples of herbicide-tolerant plants which may be mentioned are maize varieties, cotton varieties and soybean varieties which are sold under the following trade names: Roundup Ready® (tolerance to glyphosate, for example maize, cotton, soybean), Liberty Link® (tolerance to phosphinotricin, for example oilseed rape), IMI®) (tolerance to imidazolinone) and SCS® (tolerance to sulphonylurea), for example maize. Herbicide-resistant plants (plants bred in a conventional manner for herbicide tolerance) which may be mentioned include the varieties sold under the name Clearfield® (for example maize).

Particularly useful transgenic plants which may be treated according to the invention are plants containing transformation events, or a combination of transformation events, that are listed for example in the databases from various national or regional regulatory agencies (see for example http://gmoinfo.jrc.it/gmp_browse.aspx and http://www.agbios.com/dbase.php).

### Example 1: Tetranychus urticae - test; OP-resistant (TETRUR spray application)

| | |
|---|---|
| Solvent: | 78.0 parts by weight acetone |
| | 1.5 parts by weight dimethylformamide |
| Emulsifier: | 0.5 parts by weight alkylarylpolyglycolether |

To produce a suitable preparation of active compound, 1 part by weight of active compound is mixed with the stated amount of solvent and emulsifier, and the concentrate is diluted with emulsifier-containing water to the desired concentration.French beans (*Phaseolus vulgaris*) which are heavily infested with all stages of the two spotted spidermite (*Tetranychus urticae*)*,* are sprayed with a preparation of the active ingredient at the desired concentration.

After 5 days mortality in % is determined. 100% means that all spider mites have been killed and 0% means that none of the spider mites have been killed.

In this test, for example, the following compounds from the preparation examples showed activity of ≥ 80 % at a rate of 20 g/ ha : Ex No : T 114

In this test for example, the following compound from the preparation examples showed good activity of ≥80 % at application rate of 500 g/ha : ExNo : T1

### Example 2: Spodoptera frugiperda -test (SPODFR spray application)

| | |
|---|---|
| Solvent: | 78.0 parts by weight acetone |
| | 1.5 parts by weight dimethylformamide |
| Emulsifier: | 0.5 parts by weight alkylarylpolyglycolether |

To produce a suitable preparation of the active compound, 1 part by weight of active compound is mixed with the stated amount of solvent and emulsifier, and the concentrate is dilutes with emulsifier-containing water to the desired concentration.Maize (*Zea mais*) leaf sections are sprayed with a preparation of the active ingredient of the desired concentration. Once dry, the leaf sections are infested with fall armyworm larvae (*Spodoptera frugiperda*)*.*

After 7 days mortality in % is determined. 100% means that all caterpillars have been killed and 0% means that none of the caterpillars have been killed.

In this test for example, the following compounds from the preparation examples showed activity of ≥ 80 % at a rate of 100 g/ ha : Ex No : T 115

In this test for example, the following compound from the preparation examples showed good activity of ≥80 % at application rate of 500 g/ha : ExNo : T I

### Example 3: Phaedon cochleariae - test; (PHAECO spray application)

| | |
|---|---|
| Solvent: | 78.0 parts by weight of acetone |
| | 1.5 parts by weight of dimethylformamide |
| Emulsifier: | 0.5 parts by weight of alkylaryl polyglycolether |

To produce a suitable preparation of active compound, 1 part by weight of active compound is mixed with the stated amount of solvent and emulsifier, and the concentrate is diluted with emulsifier-containing water to the desired concentration.Chinese cabbage (*Brassica pekinesis*) leaf-disks are sprayed with a preparation of the active ingredient of the desired concentration. Once dry, the leaf disks are infested with mustard beetle larvae (*Phaedon cochleariae*)*.*

After 7 days mortality in % is determined. 100 % means that all beetle larvae have been killed and 0 % means that none of the beetle larvae have been killed.

In this test for example, the following compound from the preparation examples showed good activity of ≥80 % at application rate of 500 g/ha : ExNo : T1

### Example 4: Myzus persicae - test; (MYZUPE spray application)

| | |
|---|---|
| Solvent: | 78.0 parts by weight acetone |
| | 1.5 parts by weight dimethylformamide |
| Emulsifier: | 0.5 parts by weight alkylarylpolyglycolether |

To produce a suitable preparation of active compound, 1 part by weight of active compound is mixed with the stated amount of solvent and emulsifier, and the concentrate is diluted with emulsifier-containing water to the desired concentration.Chinese cabbage (*Brassica pekinesis*) leaf-disks infected with all instars of the green peach aphid (*Myzus persicae*)*,* are sprayed with a preparation of the active ingredient at the desired concentration.

After 6 days mortality in % is determined. 100 % means that all aphids have been killed; 0 % means that none of the aphids have been killed.

In this test for example, the following compound from the preparation examples showed good activity of ≥80 % at application rate of 500 g/ha: ExNo : T1

### Example 5

### Sphaerotheca test (cucumber) / preventive

| | |
|---|---|
| Solvent: | 49 parts by weight ofN, N - Dimethylformamide |
| Emulsifier: | 1 part by weight of Alkylarylpolyglycolether |

To produce a suitable preparation of active compound, 1 part by weight of active compound is mixed with the stated amounts of solvent and emulsifier, and the concentrate is diluted with water to the desired concentration.

To test for preventive activity, young plants are sprayed with the preparation of active compound at the stated rate of application. One day after this treatment, the plants are inoculated with an aqueous spore suspension of ***Sphaerotheca Juliginea.*** Then the plants are placed in a greenhouse at approximately 23°C and a relative atmospheric humidity of approximately 70 %.

The test is evaluated 7 days after the inoculation. 0% means an efficacy which corresponds to that of the control, while an efficacy of 100% means that no disease is observed.

**Table**

| **Sphaerotheca test (cucumber) / preventive** | | |
|---|---|---|
| Example | Rate of application of active compound in ppm | Efficacy in % |
| T 1 | 500 | 95 |
| T 114 | 500 | 90 |
| T 115 | 250 | 80 |

## Claims

1. The use of compounds of Formula (I) 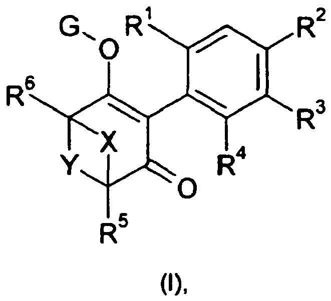 wherein
R¹ is methyl, ethyl, n-propyl, iso-propyl, cyclopropyl, halomethyl, haloethyl, halogen, vinyl, ethynyl, methoxy, ethoxy, halomethoxy or haloethoxy,
R² and R³ are independently hydrogen, halogen, C₁-C₆alkyl, C₁-C₆haloalkyl, C₁-C₆alkoxy, C₁-C₆haloalkoxy, C₂-C₆alkenyl, C₂-C₆haloalkenyl, C₂-C₆alkynyl, C₃-C₆alkenyloxy, C₃-C₆haloalkenyloxy, C₃-C₆alkynyloxy, C₃-C₆cycloalkyl, C₁-C₆alkylthio, C₁-C₆alkylsulfinyl, C₁-C₆alkylsulfonyl, C₁-C₆alkylsulfonyloxy, C₁-C₆haloalkylsulfonyloxy, cyano, nitro, optionally substituted phenyl or optionally substituted heteroaryl where at least one of R² and R³ is optionally substituted phenyl or optionally substituted heteroaryl,
R⁴ is hydrogen, methyl, ethyl, n-propyl, iso-propyl, halomethyl, haloethyl, halogen, vinyl, ethynyl, methoxy, ethoxy, halomethoxy or haloethoxy,
R⁵ and R⁶ are independently hydrogen, C₁-C₆alkyl, C₂-C₆alkenyl, C₂-C₆alkynyl, C₁-C₆haloalkyl, C₂-C₆haloalkenyl, C₁-C₆alkoxy, C₃-C₆alkenyloxy, C₃-C₆haloalkenyloxy, C₃-C₆alkynyloxy, C₁-C₄alkoxy C₁-C₄alkyl, C₁-C₄alkoxyC₁-C₄alkoxy, C₁-C₄alkoxyC₁-C₄alkoxyC₁-C₄alkyl, C₁-C₆alkylthio, C₁-C₄alkylthioC₁-C₄alkyl, C₁-C₄alkylsulfinyl, C₁-C₄alkylsulfinylC₁-C₄alkyl, C₁-C₄alkylsulfonyl, C₁-C₄alkylsulfonylC₁-C₄alkyl, hydroxy-C₁-C₄alkyl, C₁-C₆haloalkoxy C₁- C₄alkyl, C₃-C₆alkenyloxyC₁-C₄alkyl, C₃-C₆haloalkenyloxy C₁-C₄alkyl, C₃-C₆alkynyloxy C₁-C₄alkyl, C₁-C₆cyanoalkyl, C₁-C₄cyanoalkoxy, C₁-C₄cyanoalkoxyC₁-C₄alkyl, hydroxy, C₁-C₆alkylcarbonyl, carboxy, C₁-C₆alkoxycarbonyl, C₁-C₆alkylaminocarbonyl, di-C₁-C₆alkylcarbonyl, tri(C₁-C₄alkyl)silyl or tri(C₁-C₄alkyl)silyloxy,
X is optionally substituted C₁-C₃alkylene,
Y is optionally substituted C₁-C₃alkylene or optionally substituted C₂-C₃alkenylene
and
G represents hydrogen (a) or represents one of the groups 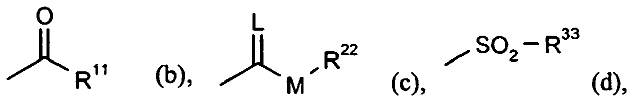 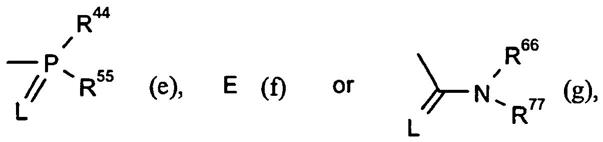
in which
E represents a metal ion or an ammonium ion,
L represents oxygen or sulphur and
M represents oxygen or sulphur,
R¹¹ represents in each case optionally halogen- or cyano-substituted C₁-C₂₀-alkyl, C₂-C₂₀-alkenyl, C₁-C₈-alkoxy-C₁-C₈-alkyl, C₁-C₈-alkylthio-C₁-C₈-alkyl or poly-C₁-C₈-alkoxy-C₁-C₈-alkyl or represents optionally halogen-, C₁-C₆-alkyl- or C₁-C₆-alkoxy-substituted C₃-C₈-cycloalkyl in which optionally one or two not directly adjacent methylene groups are replaced by oxygen and/or sulphur,
represents optionally halogen-, cyano-, nitro-, C₁-C₆-alkyl-, C₁-C₆-alkoxy-, C₁-C₆-haloalkyl-, C₁-C₆-haloalkoxy-, C₁-C₆-alkylthio- or C₁-C₆-alkylsulphonyl-substituted phenyl,
represents optionally halogen-, nitro-, cyano-, C₁-C₆-alkyl-, C₁-C₆-alkoxy-, C₁-C₆-haloalkyl- or C₁-C₆-haloalkoxy-substituted phenyl-C₁-C₆-alkyl,
represents optionally halogen- or C₁-C₆-alkyl-substituted 5- or 6-membered hetaryl having one or two heteroatoms from the group consisting of oxygen, sulphur and nitrogen, represents optionally halogen- or C₁-C₆-alkyl-substituted phenoxy-C₁-C₆-alkyl or
represents optionally halogen-, amino- or C₁-C₆-alkyl-substituted 5- or 6-membered hetaryloxy-C₁-C₆-alkyl having one or two heteroatoms from the group consisting of oxygen, sulphur and nitrogen,
R²² represents in each case optionally halogen- or cyano-substituted C₁-C₂₀-alkyl, C₂-C₂₀-alkenyl, C₁-C₈-alkoxy-C₂-C₈-alkyl or poly-C₁-C₈-alkoxy-C₂-C₈-alkyl,
represents optionally halogen-, C₁-C₆-alkyl- or C₁-C₆-alkoxy-substituted C₃-C₈-cycloalkyl or
represents in each case optionally halogen-, cyano-, nitro-, C₁-C₆-alkyl-, C₁-C₆-alkoxy-, C₁-C₆-haloalkyl- or C₁-C₆-haloalkoxy-substituted phenyl or benzyl,
R³³ represents optionally halogen-substituted C₁-C₈-alkyl or in each case optionally halogen-, C₁-C₆-alkyl-, C₁-C₆-alkoxy-, C₁-C₄-haloalkyl-, C₁-C₄-haloalkoxy-, cyano- or nitro-substituted phenyl or benzyl,
R⁴⁴ and R⁵⁵ independently of one another represent in each case optionally halogen-substituted C₁-C₈-alkyl, C₁-C₈-alkoxy, C₁-C₈-alkylamino, di(C₁-C₈-alkyl)amino, C₁-C₈-alkylthio or C₃-C₈-alkenylthio or represent in each case optionally halogen-, nitro-, cyano-, C₁-C₄-alkoxy-, C₁-C₄-haloalkoxy-, C₁-C₄-alkylthio-, C₁-C₄-halo-alkylthio-, C₁-C₄-alkyl- or C₁-C₄-haloalkyl-substituted phenyl, phenoxy or phenylthio,
R⁶⁶ and R⁷⁷ independently of one another represent hydrogen, represent in each case optionally halogen- or cyano-substituted C₁-C₈-alkyl, C₃-C₈-cycloalkyl, C₁-C₈-alkoxy, C₃-C₈-alkenyl or C₁-C₈-alkoxy-C₂-C₈-alkyl, represent in each case optionally halogen-, C₁-C₈-alkyl-, C₁-C₈-haloalkyl- or C₁-C₈-alkoxy-substituted phenyl or benzyl or together represent an optionally C₁-C₆-alkyl-substituted C₃-C₆-alkylene radical in which optionally one methylene group is replaced by oxygen or sulphur
as insecticides and/or acaricides and/or fungicides.

## Patentansprüche

1. Verwendung von Verbindungen der Formel (I) 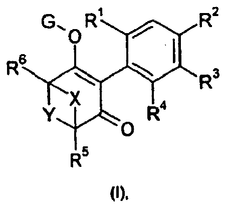 worin
R¹ für Methyl, Ethyl, n-Propyl, Isopropyl, Cyclopropyl, Halogenmethyl, Halogenethyl, Halogen, Vinyl, Ethinyl, Methoxy, Ethoxy, Halogenmethoxy oder Halogenethoxy steht,
R² und R³ unabhängig für Wasserstoff, Halogen, C₁-C₆-Alkyl, C₁-C₆-Halogenalkyl, C₁-C₆-Alkoxy, C₁-C₆-Halogenalkoxy, C₂-C₆-Alkenyl, C₂-C₆-Halogenalkenyl, C₂-C₆-Alkinyl, C₃-C₆-Alkenyloxy, C₃-C₆-Halogenalkenyloxy, C₃-C₆-Alkinyloxy, C₃-C₆-Cycloalkyl, C₁-C₆-Alkylthio, C₁-C₆-Alkylsulfinyl, C₁-C₆-Alkylsulfonyl, C₁-C₆-Alkylsulfonyloxy, C₁-C₆-Halogenalkylsulfonyloxy, Cyano, Nitro, gegebenenfalls substituiertes Phenyl oder gegebenenfalls substituiertes Heteoaryl stehen, wobei mindestens einer der Rest R² und R³ für gegebenenfalls substituiertes Phenyl oder gegebenenfalls substituiertes Heteoaryl steht,
R⁴ für Wasserstoff, Methyl, Ethyl, n-Propyl, Isopropyl, Halogenmethyl, Halogenethyl, Halogen, Vinyl, Ethinyl, Methoxy, Ethoxy, Halogenmethoxy oder Halogenethoxy steht,
R⁵ und R⁶ unabhängig für Wasserstoff, C₁-C₆-Alkyl, C₂-C₆-Alkenyl, C₂-C₆-Alkinyl, C₁-C₆-Halogenalkyl, C₂-C₆-Halogenalkenyl, C₁-C₆-Alkoxy, C₃-C₆-Alkenyloxy, C₃-C₆-Halogenalkenyloxy, C₃-C₆-Alkinyloxy, C₁-C₄-Alkoxy-C₁-C₄-alkyl; C₁-C₄-Alkoxy-C₁-C₄-alkoxy, C₁-C₄-Alkoxy-C₁-C₄-alkoxy-C₁-C₄-alkyl, C₁-C₆-Alkylthio, C₁-C₄-Alkylthio-C₁-C₄-alkyl, C₁-C₄-Alkylsulfinyl, C₁-C₄-Alkylsulfinyl-C₁-C₄-alkyl, C₁-C₄-Alkylsulfonyl, C₁-C₄-Alkylsulfonyl-C₁-C₄-alkyl, Hydroxy-C₁-C₄-alkyl, C₁-C₆-Halogenalkoxy-C₁-C₄-alkyl, C₃-C₆-Alkenyloxy-C₁-C₄-alkyl, C₃-C₆-Halogenalkenyloxy-C₁-C₄-alkyl, C₃-C₆-Alkinyloxy-C₁-C₄-alkyl, C₁-C₆-Cyanoalkyl, C₁-C₄-Cyanoalkoxy, C₁-C₄-Cyanoalkoxy-C₁-C₄-alkyl, Hydroxy, C₁-C₆-Alkylcarbonyl, Carboxy, C₁-C₆-Alkoxycarbonyl, C₁-C₆-Alkylaminocarbonyl, Di-C₁-C₆-Alkylcarbonyl, Tri (C₁-C₄-alkyl) silyl oder Tri (C₁-C₄-alkyl) silyloxy stehen,
X für gegebenenfalls substituiertes C₁-C₃-Alkylen steht,
Y für gegebenenfalls substituiertes C₁-C₃-Alkylen oder gegebenenfalls substituiertes C₂-C₃-Alkenylen steht
und
G für Wasserstoff (a) oder eine der Gruppen 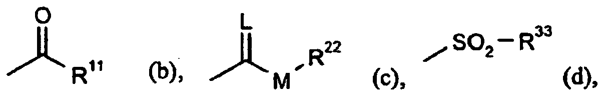 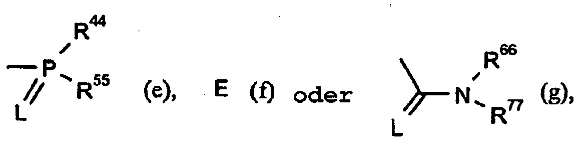 steht,
worin
E für ein Metallion oder ein Ammoniumion steht,
L für Sauerstoff oder Schwefel steht und
M für Sauerstoff oder Schwefel steht,
R¹¹ jeweils für gegebenenfalls halogen- oder cyanosubstituiertes C₁-C₂₀-Alkyl, C₂-C₂₀-Alkenyl, C₁-C₈-Alkoxy-C₁-C₈-alkyl, C₁-C₈-Alkylthio-C₁-C₈-alkyl oder Poly-C₁-C₈-alkoxy-C₁-C₈-alkyl steht oder für gegebenenfalls halogen-, C₁-C₆-alkyl- oder C₁-C₆-alkoxysubstituiertes C₃-C₈-Cycloalkyl, worin gegebenenfalls eine oder zwei nicht direkt benachbarte Methylengruppen durch Sauerstoff und/oder Schwefel ersetzt sind, steht,
für gegebenenfalls halogen-, cyano-, nitro-, C₁-C₆-alkyl-, C₁-C₆-alkoxy-, C₁-C₆-halogenalkyl-oder C₁-C₆-halogenalkoxy-, C₁-C₆-alkylthio- oder C₁-C₆-alkylsulfonylsubstituiertes Phenyl steht, für gegebenenfalls halogen-, nitro-, cyano-, C₁-C₆-alkyl-, C₁-C₆-alkoxy-, C₁-C₆-halogenalkyl-oder C₁-C₆-halogenalkoxysubstituiertes Phenyl-C₁-C₆-alkyl steht,
für gegebenenfalls halogen- oder C₁-C₆-alkylsubstituiertes 5- oder 6-gliedriges Hetaryl mit einem oder zwei Heteroatomen aus der Gruppe bestehend aus Sauerstoff, Schwefel und Stickstoff steht,
für gegebenenfalls halogen- oder C₁-C₆-alkylsubstituiertes Phenoxy-C₁-C₆-alkyl steht oder für gegebenenfalls halogen-, amino- oder C₁-C₆-alkylsubstituiertes 5- oder 6-gliedriges Hetaryloxy-C₁-C₆-alkyl mit einem oder zwei Heteroatomen aus der Gruppe bestehend aus Sauerstoff, Schwefel und Stickstoff steht,
R²² jeweils für gegebenenfalls halogen- oder cyanosubstituiertes C₁-C₂₀-Alkyl, C₂-C₂₀-Alkenyl, C₁-C₈-Alkoxy-C₂-C₈-alkyl oder Poly-C₁-C₈-alkoxy-C₁-C₈-alkyl steht,
für gegebenenfalls halogen-, C₁-C₆-alkyl- oder C₁-C₆-alkoxysubstituiertes C₃-C₈-Cycloalkyl steht oder
jeweils für gegebenenfalls halogen-, cyano-, nitro-, C₁-C₆-alkyl-, C₁-C₆-alkoxy-, C₁-C₆-halogenalkyl- oder C₁-C₆-halogenalkoxy-substituiertes Phenyl oder Benzyl steht,
R³³ für gegebenenfalls halogensubstituiertes C₁-C₈-Alkyl steht oder jeweils gegebenenfalls halogen-, C₁-C₆-alkyl-, C₁-C₆-alkoxy-, C₁-C₄-halogenalkyl-, C₁-C₄-halogenalkoxy-, cyano- oder nitrosubstituiertes Phenyl oder Benzyl steht,
R⁴⁴ und R⁵⁵ unabhängig voneinander jeweils für gegebenenfalls halogensubstituiertes C₁-C₈-Alkyl, C₁-C₈-Alkoxy, C₁-C₈-Alkylamino, Di(C₁-C₈-alkyl)amino, C₁-C₈-Alkylthio oder C₃-C₈-Alkenyl-thio stehen oder jeweils für gegebenenfalls halogen-, nitro-, cyano-, C₁-C₄-alkoxy-, C₁-C₄-halogenalkoxy-, C₁-C₄-alkylthio-, C₁-C₄-halogen-alkylthio-, C₁-C₄-alkyl- oder C₁-C₄-halogenalkyl-substituiertes Phenyl, Phenoxy oder Phenylthio stehen,
R⁶⁶ und R⁷⁷ unabhängig voneinander für Wasserstoff stehen, jeweils für gegebenenfalls halogen-oder cyanosubstituiertes C₁-C₈-Alkyl, C₃-C₈-Cycloalkyl, C₁-C₈-Alkoxy, C₃-C₈-Alkenyl oder C₁-C₈-Alkoxy-C₂-C₈-alkyl stehen, jeweils für gegebenenfalls halogen-, C₁-C₈-alkyl-, C₁-C₈-halogenalkyl- oder C₁-C₈-alkoxysubstituiertes Phenyl oder Benzyl stehen oder zusammen für einen gegebenenfalls C₁-C₆-alkylsubstituierten C₃-C₆-Alkylenrest, worin gegebenenfalls eine Methylengruppe durch Sauerstoff oder Schwefel ersetzt ist, stehen,
als Insektizide und/oder Akarizide und/oder Fungizide.

## Revendications

1. Utilisation de composés de Formule (I) 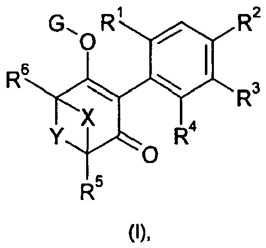 dans laquelle
R¹ est méthyle, éthyle, n-propyle, iso-propyle, cyclopropyle, halogénométhyle, halogénoéthyle, halogène, vinyle, éthynyle, méthoxy, éthoxy, halogénométhoxy ou halogénoéthoxy,
R² et R³ sont indépendamment hydrogène, halogène, C₁-C₆-alkyle, C₁-C₆halogénoalkyle, C₁-C₆alcoxy, C₁-C₆-halogénoalcoxy, C₂-C₆alcényle, C₂-C₆halogénoalcényle, C₂-C₆alcynyle, C₃-C₆alcényloxy, C₃-C₆halogénoalcényloxy, C₃-C₆alcynyloxy, C₃-C₆cycloalkyle, C₁-C₆alkylthio, C₁-C₆-alkylsulfinyle, C₁-C₆alkylsulfonyle, C₁-C₆-alkylsulfonyloxy, C₁-C₆halogénoalkylsulfonyloxy, cyano, nitro, phényle éventuellement substitué ou hétéroaryle éventuellement substitué où au moins l'un parmi R² et R³ est phényle éventuellement substitué ou hétéroaryle éventuellement substitué,
R⁴ est hydrogène, méthyle, éthyle, n-propyle, iso-propyle, halogénométhyle, halogénoéthyle, halogène, vinyle, éthynyle, méthoxy, éthoxy, halogénométhoxy ou halogénoéthoxy,
R⁵ et R⁶ sont indépendamment hydrogène, C₁-C₆alkyle, C₂-C₆alcényle, C₂-C₆alcynyle, C₁-C₆halogénoalkyle, C₂-C₆-halogénoalcényle, C₁-C₆alcoxy, C₃-C₆alcényloxy, C₃-C₆-halogénoalcényloxy, C₃-C₆alcynyloxy, C₁-C₄alcoxyC₁-C₄-alkyle, C₁-C₄alcoxyC₁-C₄alcoxy, C₁-C₄alcoxyC₁-C₄alcoxyC₁-C₄alkyle, C₁-C₆alkylthio, C₁-C₄alkylthioC₁-C₄alkyle, C₁-C₄-alkylsulfinyle, C₁-C₄alkylsulfinylC₁-C₄alkyle, C₁-C₄-alkylsulfonyle, C₁-C₄alkylsulfonylC₁-C₄alkyle, hydroxy-C₁-C₄alkyle, C₁-C₆halogénoalcoxyC₁-C₄alkyle, C₃-C₆-alcényloxyC₁-C₄alkyle, C₃-C₆halogénoalcényloxyC₁-C₄-alkyle, C₃-C₆alcynyloxyC₁-C₄alkyle, C₁-C₆cyanoalkyle, C₁-C₄cyanoalcoxy, C₁-C₄cyanoalcoxyC₁-C₄alkyle, hydroxy, C₁-C₆alkylcarbonyle, carboxy, C₁-C₆alcoxycarbonyle, C₁-C₆-alkylaminocarbonyle, di-C₁-C₆alkylcarbonyle, tri(C₁-C₄-alkyl)silyle ou tri(C₁-C₄alkyl)silyloxy,
X est C₁-C₃alkylène éventuellement substitué,
Y est C₁-C₃alkylène éventuellement substitué ou C₂-C₃alcénylène éventuellement substitué, et
G représente hydrogène (a) ou représente l'un des groupements 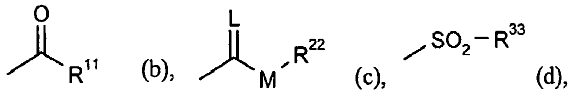 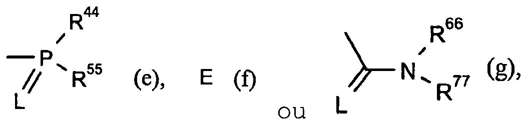 dans lesquels
E représente un ion métallique ou un ion ammonium,
L représente oxygène ou soufre et
M représente oxygène ou soufre,
R¹¹ représente dans chaque cas C₁-C₂₀-alkyle, C₂-C₂₀-alcényle, C₁-C₈-alcoxy-C₁-C₈-alkyle, C₁-C₈-alkylthio-C₁-C₈-alkyle ou poly-C₁-C₈-alcoxy-C₁-C₈-alkyle éventuellement substitué par halogène ou cyano, ou représente C₃-C₈-cycloalkyle éventuellement substitué par halogène, C₁-C₆-alkyle ou C₁-C₆-alcoxy où éventuellement un ou deux groupements méthylène non directement adjacents sont remplacés par oxygène et/ou soufre,
représente phényle éventuellement substitué par halogène, cyano, nitro, C₁-C₆-alkyle, C₁-C₆-alcoxy, C₁-C₆-halogénoalkyle, C₁-C₆-halogénoalcoxy, C₁-C₆-alkylthio ou C₁-C₆-alkylsulfonyle,
représente phényl-C₁-C₆-alkyle éventuellement substitué par halogène, nitro, cyano, C₁-C₆-alkyle, C₁-C₆-alcoxy, C₁-C₆-halogénoalkyle ou C₁-C₆-halogénoalcoxy,
représente hétéroaryle de 5 ou 6 chaînons éventuellement substitué par halogène ou C₁-C₆-alkyle, ayant un ou deux hétéroatomes issus du groupe constitué par oxygène, soufre et azote,
représente phénoxy-C₁-C₆-alkyle éventuellement substitué par halogène ou C₁-C₆-alkyle, ou
représente hétéroaryloxy-C₁-C₆-alkyle de 5 ou 6 chaînons éventuellement substitué par halogène, amino ou C₁-C₆-alkyle, ayant un ou deux hétéroatomes issus du groupe constitué par oxygène, soufre et azote,
R²² représente dans chaque cas C₁-C₂₀-alkyle, C₂-C₂₀-alcényle, C₁-C₈-alcoxy-C₂-C₈-alkyle ou poly-C₁-C₈-alcoxy-C₂-C₈-alkyle éventuellement substitué par halogène ou cyano,
représente C₃-C₈-cycloalkyle éventuellement substitué par halogène, C₁-C₆-alkyle ou C₁-C₆-alcoxy, ou
représente dans chaque cas phényle ou benzyle éventuellement substitué par halogène, cyano, nitro, C₁-C₆-alkyle, C₁-C₆-alcoxy, C₁-C₆-halogénoalkyle ou C₁-C₆-halogénoalcoxy,
R³³ représente C₁-C₈-alkyle éventuellement substitué par halogène ou dans chaque cas phényle ou benzyle éventuellement substitué par halogène, C₁-C₆-alkyle, C₁-C₆-alcoxy, C₁-C₄-halogénoalkyle, C₁-C₄-halogénoalcoxy, cyano ou nitro,
R⁴⁴ et R⁵⁵ représentent indépendamment l'un de l'autre dans chaque cas C₁-C₈-alkyle, C₁-C₈-alcoxy, C₁-C₈-alkylamino, di(C₁-C₈-alkyl)amino, C₁-C₈-alkylthio ou C₃-C₈-alcénylthio éventuellement substitué par halogène ou représentent dans chaque cas phényle, phénoxy ou phénylthio éventuellement substitué par halogène, nitro, cyano, C₁-C₄-alcoxy, C₁-C₄-halogénoalcoxy, C₁-C₄-alkylthio, C₁-C₄-halogénoalkylthio, C₁-C₄-alkyle ou C₁-C₄-halogénoalkyle,
R⁶⁶ et R⁷⁷ représentent indépendamment l'un de l'autre hydrogène, représentent dans chaque cas C₁-C₈-alkyle, C₃-C₈-cycloalkyle, C₁-C₈-alcoxy, C₃-C₈-alcényle ou C₁-C₈-alcoxy-C₂-C₈-alkyle éventuellement substitué par halogène ou cyano, représentent dans chaque cas phényle ou benzyle éventuellement substitué par halogène, C₁-C₈-alkyle, C₁-C₈-halogénoalkyle ou C₁-C₈-alcoxy ou représentent ensemble un radical C₃-C₆-alkylène éventuellement substitué par C₁-C₆-alkyle où éventuellement un groupement méthylène est remplacé par oxygène ou soufre,
comme insecticides et/ou acaricides et/ou fongicides.
